(19)

Europäisches
Patentamt
European
Patent Office
Office européen
des brevets

(11) **EP 4 730 857 A1**

(12) **EUROPEAN PATENT APPLICATION**
published in accordance with Art. 153(4) EPC

(43) Date of publication:
**22.04.2026 Bulletin 2026/17**

(21) Application number: **24844635.3**

(22) Date of filing: **11.07.2024**

(51) International Patent Classification (IPC):
***H04W 24/02*** (2009.01)

(52) Cooperative Patent Classification (CPC):
**H04W 24/02; H04W 52/02**

(86) International application number:
**PCT/CN2024/105014**

(87) International publication number:
**WO 2025/020942 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2023 CN 202310916760**

(71) Applicant: **Huawei Technologies Co., Ltd.
Shenzhen, Guangdong 518129 (CN)**

(72) Inventor: **WANG, Kang
Shenzhen, Guangdong 518129 (CN)**

(74) Representative: **Huawei European IPR
Huawei Technologies Duesseldorf GmbH
Riesstraße 25
80992 München (DE)**

(54) **COMMUNICATION METHOD AND APPARATUS**

(57)     This application discloses a communication method and apparatus. The communication method includes: A second node sends a synchronization signal in a first time unit, and a first node sends a synchronization response signal in the first time unit in response to the synchronization signal; and the second node receives a first ranging signal in a second time unit, and the first node sends a first ranging response signal in the second time unit in response to the first ranging signal. The synchronization signal is used for time synchronization between the first node and the second node. Both the first time unit and the second time unit are included in a ranging time unit of the second node, the first time unit is configured to send a first bandwidth signal, and the second time unit is configured to send a second bandwidth signal. A bandwidth occupied by the second bandwidth signal is greater than a bandwidth occupied by the first bandwidth signal. This can reduce duration occupied by a large bandwidth signal compared with a manner in which the second bandwidth signal is exchanged in an entire ranging process, thereby reducing power consumption of the node.

FIG. 23

**Description**

CROSS-REFERENCE TO RELATED APPLICATIONS

This application claims priority to Chinese Patent Application No. 202310916760.6, filed with the China National Intellectual Property Administration on July 24, 2023 and entitled "COMMUNICATION METHOD AND APPARATUS", which is incorporated herein by reference in its entirety.

TECHNICAL FIELD

Embodiments of this application relate to the field of ranging technologies, and in particular, to a communication method and apparatus.

BACKGROUND

An ultra-wideband (ultra-wideband, UWB) technology is widely applied to high-precision ranging and positioning scenarios, and the like due to low power consumption and high time resolution.
Currently, when ranging or communication is performed between different nodes based on the UWB technology, a UWB signal that needs to be received/sent occupies a long period of time, and power consumption of the node is high.

SUMMARY

Embodiments of this application provide a communication method and apparatus, to reduce power consumption of a node in a ranging process.
To achieve the foregoing objectives, the following technical solutions are used in embodiments of this application.
According to a first aspect, an embodiment of this application provides a communication method. The method may be performed by a first communication apparatus. The first communication apparatus may be a communication device or a communication apparatus that can support a communication device to implement a function required by the method, for example, a unit, a functional module, a circuit, or a chip system in the communication device. The following describes the method provided in the first aspect by using an example in which the first communication apparatus is a first node.
The communication method includes: The first node receives a synchronization signal from a second node in a first time unit; sends a synchronization response signal in the first time unit in response to the synchronization signal; receives a first ranging signal from the second node in a second time unit; and sends a first ranging response signal in the second time unit in response to the first ranging signal. The synchronization signal is used for time synchronization between the first node and the second node. The first ranging signal is used to measure a distance between the first node and the second node. Both the first time unit and the second time unit are included in a ranging time unit of the second node, the first time unit is configured to send a first bandwidth signal, and the second time unit is configured to send a second bandwidth signal. A bandwidth occupied by the second bandwidth signal is greater than a bandwidth occupied by the first bandwidth signal.
In the method, signals exchanged between the first node and the second node in a ranging process are the first bandwidth signal and the second bandwidth signal. This can reduce duration occupied by a large bandwidth signal compared with a manner in which the second bandwidth signal is exchanged in the entire ranging process, thereby reducing power consumption of the node.
In a possible implementation, the bandwidth occupied by the second bandwidth signal is greater than or equal to 500 MHz, and the second bandwidth signal is a nanosecond-level or picosecond-level pulse signal.
Compared with the first bandwidth signal, the second bandwidth signal is a wideband signal. For example, the second bandwidth signal is a UWB signal.
In a possible implementation, a pulse repetition frequency (mean pulse repeat frequency, MPRF) of the second bandwidth signal is within [16.1 MHz, 111.09 MHz], to reduce, as much as possible, duration occupied by a signal with a large bandwidth. For example, the pulse repetition frequency of the second bandwidth signal may be 16.1 MHz, 55.54 MHz, 62.4 MHz, 62.89 MHz, or 111.09 MHz.
In a possible implementation, a moment S0' at which the first node receives the first ranging signal and a moment S0 at which the first node receives the synchronization response signal are separated by first duration, and the first duration is predefined or configured.
According to the method, after receiving the synchronization response signal, the first node can determine the moment of receiving the first ranging signal, to turn on a receiver at a proper occasion to receive the first ranging signal, without a need to always turn on the receiver, thereby reducing power consumption of the first node.

In a possible implementation, a sending moment R0' of the first ranging response signal and a sending moment R0 of the synchronization response signal are separated by second duration, and the second duration is predefined or configured.

After receiving the first ranging signal, the first node can determine, based on the sending moment of the synchronization response signal, an occasion for sending the first ranging response signal. According to the method, the second node can determine the occasion for receiving the first ranging response signal, so that the second node turns on a receiver at a proper occasion, without requiring the second node to always turn on the receiver, thereby reducing power consumption of the second node.

In a possible implementation, the method further includes: The first node receives a second ranging signal from the second node in the second time unit.

In a possible implementation, a moment S0'' at which the first node receives the second ranging signal and the moment S0' at which the first node receives the first ranging signal are separated by third duration, and the third duration is predefined or configured.

According to the method, after receiving the first ranging signal, the first node can determine the moment of receiving the second ranging signal, to turn on the receiver at a proper occasion to receive the second ranging signal, without a need to always turn on the receiver, thereby reducing power consumption of the first node.

In a possible implementation, a time of flight TOF of a signal between the first node and the second node meets the following formula:

$$TOF = \frac{(R'_{0\_t} - S'_t) \times (S''_0 - R'_0) - (R'_0 - S'_0) \times (S''_t - R'_{0\_t})}{S''_0 - S'_0 + S'_t - S''_t}$$

Herein, $S'_t$ is a moment at which the second node sends the first ranging signal, $S'_0$ is the moment at which the first node receives the first ranging signal, $S''_t$ is the moment at which the second node sends the second ranging signal, $S''_0$ is the receiving moment at which the first node receives the second ranging signal, $R'_0$ is the moment at which the first node sends the first ranging response signal, and $R'_{0\_t}$ is a moment at which the second node receives the first ranging response signal.

In a possible implementation, the method further includes: The first node receives a measured value from the second node in a third time unit. The third time unit is included in the ranging time unit of the second node, the third time unit is configured to send the first bandwidth signal, and the measured value includes a receiving time of the second ranging response signal.

According to the method, using the first bandwidth signal when the second node reports the measured value can further reduce duration occupied by the second bandwidth signal, and further reduce power consumption of the first node.

In a possible implementation, the method further includes: The first node broadcasts a control signal. The control signal is the first bandwidth signal, the control signal includes one or more of the following: network access time information or ranging duration information, and the ranging duration includes one or more of the following: a quantity N of ranging time units, duration occupied by the ranging time unit, duration occupied by the first time unit, duration occupied by the second time unit, or duration occupied by the third time unit.

According to the method, the second node can determine a time domain position of the first bandwidth signal and a time domain position of the second bandwidth signal, so that resources of a plurality of second nodes do not conflict in a scenario of the plurality of second nodes.

According to a second aspect, an embodiment of this application provides a communication method. The method may be performed by a second communication apparatus. The second communication apparatus may be a communication device or a communication apparatus that can support a communication device to implement a function required by the method, for example, a unit, a functional module, a circuit, or a chip system in the communication device. The following describes the method provided in the second aspect by using an example in which the second communication apparatus is a second node.

The communication method includes: The second node sends a synchronization signal in a first time unit; receives a synchronization response signal from a first node in the first time unit; sends a first ranging signal in a second time unit; and receives a first ranging response signal from the first node in the second time unit. The synchronization signal is used for time synchronization between the first node and the second node. The first ranging signal is used to measure a distance between the first node and the second node. Both the first time unit and the second time unit are included in a ranging time unit of the second node, the first time unit is configured to send a first bandwidth signal, and the second time unit is configured to send a second bandwidth signal. A bandwidth occupied by the second bandwidth signal is greater than a bandwidth occupied by the first bandwidth signal.

In a possible implementation, the bandwidth occupied by the second bandwidth signal is greater than or equal to 500 MHz, and the second bandwidth signal is a nanosecond-level or picosecond-level pulse signal.

In a possible implementation, a pulse repetition frequency of the second bandwidth signal is within [16.1 MHz, 111.09 MHz].

In a possible implementation, a sending moment St' of the first ranging signal and a sending moment St of the synchronization signal are separated by first duration, and the first duration is predefined or configured.

In a possible implementation, a moment R0_t' at which the second node receives the first ranging response signal and a moment R0_t at which the second node receives the synchronization response signal are separated by second duration, and the second duration is predefined or configured.

In a possible implementation, the method further includes: The second node sends a second ranging signal to the first node in the second time unit.

In a possible implementation, the sending moment St' of the second ranging signal and the sending moment St' of the first ranging signal are separated by third duration, and the third duration is predefined or configured.

In a possible implementation, a time of flight TOF of a signal between the first node and the second node meets the following formula:

$$TOF = \frac{(R_{0\_t}^{`} - S_t^{`}) \times (S_0^{``} - R_0^{`}) - (R_0^{`} - S_0^{`}) \times (S_t^{``} - R_{0\_t}^{`})}{S_0^{``} - S_0^{`} + S_t^{``} - S_t^{`}}$$

Herein, $S_t^{`}$ is a moment at which the second node sends the first ranging signal, $S_0^{`}$ is the moment at which the first node receives the first ranging signal, $S_t^{``}$ is the moment at which the second node sends the second ranging signal, $S_0^{``}$ is the receiving moment at which the first node receives the second ranging signal, $R_0^{`}$ is the moment at which the first node sends the first ranging response signal, and $R_{0\_t}^{`}$ is a moment at which the second node receives the first ranging response signal.

In a possible implementation, the method further includes: The second node sends a measured value in a third time unit. The third time unit is included in the ranging time unit of the second node, and the third time unit is configured to send the first bandwidth signal.

In a possible implementation, the method further includes: The second node receives a control signal. The control signal is the first bandwidth signal, the control signal includes one or more of the following: network access time information or ranging duration information, and the ranging duration includes one or more of the following: a quantity N of ranging time units, duration occupied by the ranging time unit, duration occupied by the first time unit, duration occupied by the second time unit, or duration occupied by the third time unit.

For technical effect brought by the second aspect and the possible implementations of the second aspect, refer to descriptions of the technical effect of the first aspect and the possible implementations of the first aspect.

According to a third aspect, an embodiment of this application provides a communication apparatus. The communication apparatus has a function of implementing behavior in the method embodiment of the first aspect or the second aspect. For beneficial effect, refer to the descriptions of the first aspect and the second aspect. Details are not described herein again. For example, the communication apparatus may be the first node in the first aspect, or the communication apparatus may be an apparatus that can support the first node to implement a function required by the method provided in the first aspect. For example, the communication apparatus may be a chip or a chip system in the first node. For another example, the communication apparatus may be the second node in the second aspect, or the communication apparatus may be an apparatus that can support the second node to implement a function required by the method provided in the second aspect. For example, the communication apparatus may be a chip or a chip system in the second node.

In a possible design, the communication apparatus includes a corresponding means (means) or module configured to perform the method in the first aspect or the second aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units. These units (modules) may perform corresponding functions in the method examples according to any one of the first aspect and the second aspect. For details, refer to the detailed descriptions in the method examples. Details are not described herein.

According to a fourth aspect, an embodiment of this application provides a communication apparatus. The communication apparatus may be the communication apparatus in the third aspect of the foregoing embodiments, or may be a chip or a chip system disposed in the communication apparatus in the third aspect. The communication apparatus includes a communication interface and a processor, and optionally, further includes a memory. The memory is configured to store a computer program, instructions, or data. The processor is coupled with the memory and the communication interface. When the processor reads the computer program, instructions, or data, the communication apparatus is enabled to perform the method performed by the first node in the foregoing method embodiments. For example, the communication apparatus may be the first node or a functional module in the first node, for example, a radio-frequency chip.

According to a fifth aspect, an embodiment of this application provides a chip system. The chip system includes a processor, and may further include a communication interface, to implement the method according to either the first aspect or the second aspect. Optionally, the chip system further includes a memory. The memory is configured to store a computer program (which may also be referred to as code or instructions). The processor is configured to invoke the computer program from the memory and run the computer program, so that a device in which the chip system is installed performs the method according to either the first aspect or the second aspect, and any possible implementation of either the first aspect or the second aspect. The chip system may include a chip, or may include a chip and another discrete component.

According to a sixth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to either the first aspect or the second aspect.

In a specific implementation process, the communication apparatus may be a chip, the input circuit may be an input pin, the output circuit may be an output pin, and the logic circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit. The circuit is used as the input circuit and the output circuit at different moments. Specific implementations of the input/output interface and the logic circuit are not limited in this application.

In an implementation, when the communication apparatus is a wireless communication device, the wireless communication device may be a network device such as a base station. The interface circuit may be a radio frequency processing chip in the wireless communication device, and the processing circuit may be a baseband processing chip in the wireless communication device.

According to a seventh aspect, an embodiment of this application provides a communication system. The communication system includes a first network apparatus and a second network apparatus that are configured to implement a function in the first aspect. Optionally, the communication system further includes a terminal apparatus. Alternatively, the communication system includes the first network apparatus and the second network apparatus that are configured to implement a function in the second aspect. Optionally, the communication system further includes the terminal apparatus.

According to an eighth aspect, this application provides a computer-readable storage medium. The computer-readable storage medium stores a computer program. When the computer program is run, the method in either the first aspect or the second aspect is implemented.

According to a ninth aspect, a computer program product is provided. The computer program product includes computer program code. When the computer program code is run, the method in either the first aspect or the second aspect is performed.

For beneficial effect of the third aspect to the ninth aspect and the implementations thereof, refer to the descriptions of the first aspect and the second aspect, or the beneficial effect of the first aspect and the second aspect and the implementations thereof.

BRIEF DESCRIPTION OF DRAWINGS

FIG. 1 is a diagram of a ranging system to which an embodiment of this application is applicable;

FIG. 2 is a diagram of a principle of ranging based on a UWB superframe;

FIG. 3 is a diagram of a structure of a superframe;

FIG. 4 is a diagram of a structure of a UWB frame;

FIG. 5 is a diagram of another structure of a UWB frame;

FIG. 6 is a diagram of a chip architecture according to an embodiment of this application;

FIG. 7 is a diagram of another chip architecture according to an embodiment of this application;

FIG. 8 is a diagram of still another chip architecture according to an embodiment of this application;

FIG. 9 is a diagram of a chip module framework according to an embodiment of this application;

FIG. 10 is a diagram of another chip module framework according to an embodiment of this application;

FIG. 11 is a diagram of still another chip module framework according to an embodiment of this application;

FIG. 12 is a diagram of a framework of a software static policy according to an embodiment of this application;

FIG. 13 is a diagram of a framework of a hardware arbitration time division (PTA) policy according to an embodiment of this application;

FIG. 14 is a schematic flowchart of a type of link establishment according to an embodiment of this application;

FIG. 15 is a schematic flowchart of another type of link establishment according to an embodiment of this application;

FIG. 16 is a schematic flowchart of still another type of link establishment according to an embodiment of this application;

FIG. 17 is a schematic flowchart of still another type of link establishment according to an embodiment of this application;

FIG. 18 is a schematic flowchart of still another type of link establishment according to an embodiment of this application;

FIG. 19 is a schematic flowchart of still another type of link establishment according to an embodiment of this application;

FIG. 20 is a diagram of a narrowband-assisted wideband according to an embodiment of this application;

FIG. 21 is a diagram of an inter-node ranging process according to an embodiment of this application;

FIG. 22 is a diagram in which there is a CFO between nodes according to an embodiment of this application;

FIG. 23 is a schematic flowchart of a communication method according to an embodiment of this application;

FIG. 24 is another diagram of an inter-node ranging process according to an embodiment of this application;

FIG. 25 is a diagram of a structure of a communication apparatus according to an embodiment of this application; and

FIG. 26 is a diagram of another structure of a communication apparatus according to an embodiment of this application.

DESCRIPTION OF EMBODIMENTS

A communication method provided in embodiments of this application may be applied to ranging and positioning scenarios, and the like, and may be applied to various communication systems. For example, the communication method provided in embodiments of this application may be applied to a 3rd generation partnership project (3rd generation partnership project, 3GPP)-related cellular system, for example, a long term evolution (long term evolution, LTE) communication system or a 5th generation (the sixth generation, 5G) mobile communication system, or may be applied to another next-generation mobile communication system, for example, a 6th generation (6G) communication system, or another similar communication system. The 5G mobile communication system includes a new radio (new radio, NR) communication system. The another similar communication system may include a wireless fidelity (wireless fidelity, Wi-Fi) system, a vehicle to everything (vehicle to everything, V2X) system, an internet of things (internet of things, IoT) system, a narrowband internet of things (narrowband internet of things, NB-IoT) system, and the like.

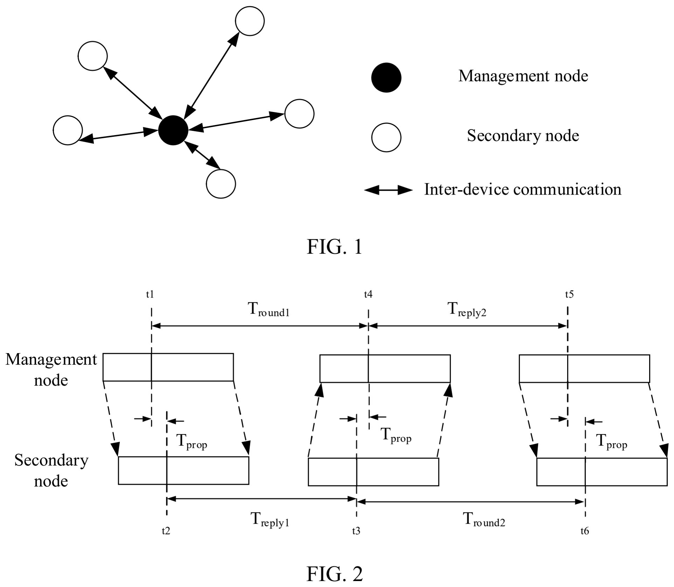

For example, FIG. 1 is a diagram of a ranging system to which an embodiment of this application is applicable. The ranging system may include a management node and at least one secondary node. The management node is a node that sends data scheduling information. The management node may manage a secondary node that establishes a communication connection to the management node. The secondary node is a node that receives the data scheduling information, and performs data receiving/sending or data processing based on the received data scheduling information. A ranging process may be performed between the management node and any two of the at least one secondary node. As a controller (controller) in the ranging system, the management node may control and manage all nodes in the ranging system. For example, the management node may indicate the two nodes in the ranging system that perform the ranging process, configure an initiator and a responder in the two nodes, and configure network parameters of the two nodes in the ranging process. As a controlee (controlee), the at least one secondary node may perform a ranging process with another node under control of the management node.

The two nodes that perform the ranging process are an initiator (initiator)/ranging initiation device and a responder (responder)/ranging response device of the ranging process. The ranging initiation device may be a network device, and the ranging response device is a terminal device. Alternatively, both the ranging initiation device and the ranging response device may be terminal devices. Alternatively, the ranging initiation device and the ranging response device may be other devices that can implement ranging, and the like. This is not limited in this application.

The network device in embodiments of this application is mainly an access network device. Therefore, in the following, unless otherwise specified, the "network device" is a radio access network (radio access network, RAN) device, and may be briefly referred to as an access network device. The RAN may be a 3GPP-related cellular system, for example, a 5G communication system, or a future-oriented evolved system (for example, a 6G communication system). Alternatively, the RAN may be an open access network (open RAN, O-RAN, or ORAN), a cloud radio access network (cloud radio access network, CRAN), a virtual radio access network (virtualized RAN, vRAN), or the like. The RAN may alternatively be a communication system that integrates the foregoing two or more systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, or the like. The RAN node may be a macro base station, a micro base station, an indoor base station, a relay node, a donor node/host node, a radio controller, or the like. The RAN node may alternatively be a server, a wearable device, a vehicle, a vehicle-mounted device, or the like. For example, a RAN node in a vehicle to everything (vehicle to everything, V2X) technology may be a roadside unit (roadside unit, RSU).

In another possible scenario, the RAN node may be a module or unit that completes some functions of the base station; or a plurality of RAN nodes cooperate to assist the terminal device to implement radio access, and different RAN nodes separately implement some functions of the base station. For example, the RAN node may be a central unit (central unit, CU), a distributed unit (distributed unit, DU), or a radio unit (radio unit, RU). A function of the CU may be implemented by one entity, or may be implemented by different entities. For example, the function of the CU may be further divided. In other words, a control plane and a user plane are separated and implemented by using different entities: a control plane CU entity (namely, a CU-control plane (control plane, CP) entity) and a user plane CU entity (namely, a CU-user plane (user plane, UP) entity). The CU-CP entity and the CU-UP entity may be coupled to the DU, to jointly complete functions of the RAN node.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The CU and the DU may be configured based on protocol layer functions of a wireless network implemented by the CU and the DU. For example, the CU is configured to implement functions of a packet data convergence protocol (packet data convergence protocol, PDCP) layer and higher protocol layers (for example, a radio resource control (radio resource control, RRC) layer and/or a service data adaptation protocol (service data adaptation protocol, SDAP) layer).

The DU is configured to implement functions of protocol layers (for example, a radio link control (radio link control, RLC) layer, a medium access control (media access control, MAC) layer, and/or a physical (physical, PHY) layer) lower than the PDCP layer. For another example, the CU is configured to implement a function of a protocol layer higher than a PDCP layer (for example, an RRC layer and/or an SDAP layer), and the DU is configured to implement functions of the PDCP layer and a protocol layer lower than the PDCP layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU and the DU may be separately disposed, or may be included in a same network element, for example, a baseband unit (baseband unit, BBU).

The division into processing functions of the CU and the DU based on protocol layers is merely an example, and may be division in another manner. For example, in a design, the CU or the DU may further have some processing functions of the protocol layer through division. In a design, some functions of an RLC layer and functions of a protocol layer higher than the RLC layer are set on the CU, and remaining functions of the RLC layer and functions of a protocol layer lower than the RLC layer are set on the DU. For example, in another design, the CU or the DU may alternatively have functions through division based on a service type or another system requirement, for example, through division based on a delay. A function whose processing time needs to meet a delay requirement is set on the DU, and a function whose processing time does not need to meet the delay requirement is set on the CU.

In another possible design, the DU and the RU cooperate to jointly implement a function of the PHY layer, or some functions of the PHY layer of the DU are moved to the RU for implementation. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions is closer to the MAC layer. The lower-layer functions of the physical layer may include another part of functions of the physical layer, and the part of functions is closer to an intermediate radio frequency side. Specific functions of the DU and the RU are not limited in this application. An interface between the DU and the RU may be referred to as a fronthaul interface.

The terminal device may also be referred to as a terminal, user equipment (user equipment, UE), a mobile station, a mobile terminal, or the like. The terminal device may be widely applied to various scenarios such as device-to-device (device-to-device, D2D), V2X communication, machine-type communication (machine-type communication, MTC), an internet of things (internet of things, IoT), virtual reality, augmented reality, industrial control, self-driving, telemedicine, smart grid, smart furniture, smart office, a smart wearable device, smart transportation, and smart city. The terminal may be a mobile phone, a tablet computer, a computer having a wireless transceiver function, a wearable device, a vehicle, a vehicle-mounted device, an uncrewed aerial vehicle, a helicopter, an airplane, a ship, a hot air balloon, a robot, a robotic arm, a smart home device, or the like. A specific form of the terminal device is not limited in embodiments of this application.

In one ranging process of two nodes, a transmission frame may be divided into a plurality of fragments, or a ranging signal may be divided into a plurality of fragments, or one ranging process may be divided into a plurality of phases (or ranging rounds (ranging round)). For example, the plurality of phases are a ranging control phase (ranging control phase, RCP), a ranging initiation phase (ranging initiation phase, RIP), a ranging response phase (ranging response phase, RRP), and a measurement report phase (measurement report phase, RRP). The RCP may be a $1^{st}$ slot (slot) of each $1^{st}$ phase, and is used to send a phase control frame (ranging control message, RCM). The RCM mainly includes network parameters such as a role of each node, a sequence used for ranging, and a ranging round index (ranging round index).

First, the management node may allocate a role to each node, and indicate the role to the corresponding node by using the RCM. For example, the management node may configure a role of the management node as an initiator of the ranging process, and configure a role of the secondary node as a responder of the ranging process. In this case, the management node indicates the role of the secondary node to a node by using the RCM. The management node further configures the network parameter (for example, a plurality of ranging rounds) of the ranging process, and indicates the network parameter to the secondary node by using the RCM. The management node and the secondary node each perform a corresponding ranging step in each ranging round of the ranging process based on each ranging round configured by the management node. For example, the management node serves as an initiator of the ranging process. Before sending a ranging signal, the management node synchronizes with the secondary node. To be specific, the management node sends a poll (Poll) packet. The poll packet is used to configure a quantity N of fragments of the ranging signal and duration of each fragment. A ranging response device sends a response (response, RES) packet after receiving the poll packet. Then, the management node may send each fragment of the ranging signal. For example, the management node sends, in the RIP phase, the ranging signal to the secondary node that serves as the responder. The ranging signal carries time information of sending the ranging signal by the management node. After receiving the ranging signal, the secondary node feeds back a ranging response signal to the management node. The ranging response signal carries time information of feeding back the ranging response signal by the secondary node. After the secondary node feeds back the ranging response signal to the management node, the management node and the secondary node may calculate a distance between the management node and the secondary node based on a time of flight of the ranging signal between the management node and the secondary node. In addition, either the management node or the secondary node may send, to a peer end, a measured distance value calculated by either the management node or the secondary node.

FIG. 2 shows a ranging principle. In FIG. 2, an example in which a management node and a secondary node perform a ranging process and double-sided two-way ranging (double-sided two-way ranging, DS-TWR) is used. DS-TWR is ranging in two round-trip times. In first two information exchanges, the management node sends a ranging signal to the secondary node at a moment t1; the secondary node receives the ranging signal at a moment t2, and feeds back a ranging response signal to the management node at a moment t3; and the management node receives the ranging response signal at a moment t4. Optionally, the ranging signal sent by the management node at the moment t1 may be time information of the ranging signal (namely, a sending time of the ranging signal). Optionally, the ranging response signal sent by the secondary node at the moment t3 may carry time information (namely, a sending time of the ranging response signal) of feeding back the ranging response signal by the secondary node. The management node may determine a round-trip time $T_{round1}$ of a current exchange based on the sending time of the ranging response signal and the sending time of the ranging signal. Similarly, the secondary node may determine a current reply time interval $T_{reply1}$ based on the sending time of the ranging signal and the sending time of the ranging response signal. Similarly, in two subsequent information exchanges, the management node sends a ranging signal to the secondary node at a moment t5; the secondary node receives the ranging signal at a moment t6; the management node may determine a round-trip time $T_{round2}$ of a current exchange based on a sending time of the ranging response signal and a sending time of the ranging signal; and the secondary node may determine a current reply time interval $T_{reply2}$ based on the sending time of the ranging signal and the sending time of the ranging response signal. In the four information exchanges, a time of flight $T_{prop}$ of a signal between the management node and the secondary node meets the following formula:

$$T_{prop} = \frac{(T_{round1} * T_{round2} - T_{reply1} * T_{reply2})}{T_{round1} + T_{round2} + T_{reply1} + T_{reply2}}$$

A distance between the management node and the secondary node is $T_{prop}$ multiplied by a speed of light c. It can be learned that the distance between the two nodes is measured by using the foregoing ranging process. In the system shown in FIG. 1, a node may be further positioned based on a position of a known node and the foregoing ranging process.

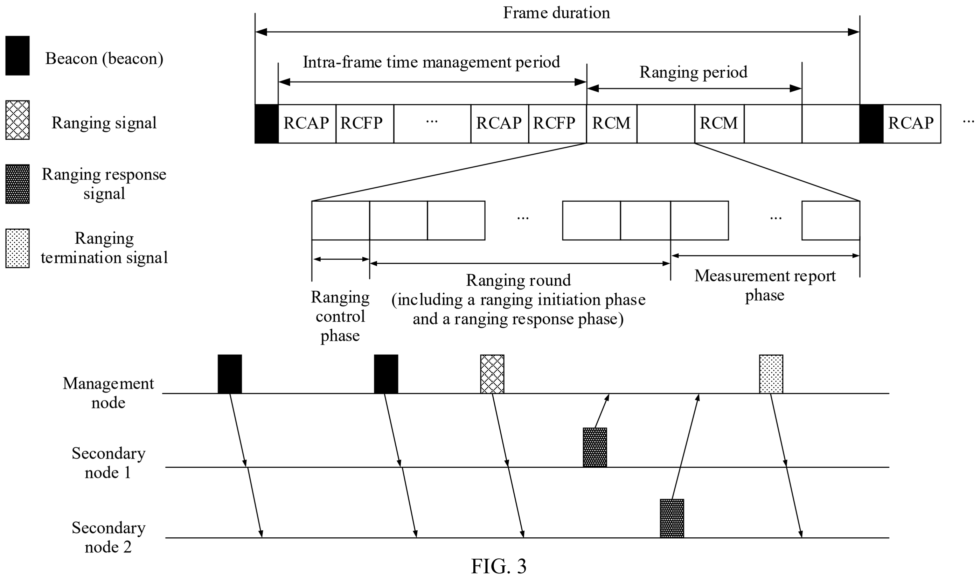

A signal that may be transmitted between the management node and the secondary node may be a superframe. It should be noted that the superframe is an information frame in a period of time, for example, a synchronization frame/beacon frame, a ranging frame, or a data frame. FIG. 3 shows a structure of a superframe. The superframe may be used in the system shown in FIG. 1. In FIG. 3, an example in which a ranging system includes a management node, a secondary node 1, and a secondary node 2 is used. As shown in FIG. 2, duration of the superframe is an interval (also referred to as a beacon interval (beacon interval)) between two beacons (beacon). That the management node sends the superframe may be understood as that the management node sends a beacon at the beacon interval. The beacon interval includes a ranging management period (ranging management period) and a ranging period (ranging period). The ranging management period includes at least one ranging contention access period (ranging contention access period, RACP) and at least one ranging contention free period (ranging contention free period, RCFP). The ranging period includes the foregoing plurality of ranging rounds, and each ranging round includes a plurality of slots (ranging slots 1 to n), which are used for ranging between devices.

As shown in FIG. 3, the management node may send the beacon at the beacon interval, and the secondary node 1 and the secondary node 2 may implement time synchronization with the management node based on a first received beacon frame. The management node may send a ranging signal after sending the beacon; the secondary node 1 and the secondary node 2 receive the ranging signal, and each send a ranging response signal to the management node; and the management node receives the ranging response signal, and may send a ranging termination signal to the secondary node 1 and the secondary node 2. The management node and the secondary node 1/secondary node 2 may calculate a distance between the management node and the secondary node 1/secondary node 2 based on a time of flight of the ranging signal.

A UWB technology is used between different nodes currently, to improve ranging precision. Due to characteristics such as low power consumption and high time resolution, the UWB technology can realize high-precision ranging and positioning at a centimeter level, and is widely applied. In this embodiment of this application, UWB ranging is measuring an inter-node distance between different nodes based on a UWB communication technology. A principle of UWB ranging is calculating the distance between nodes based on a transmission period and a speed (usually a speed of light) of a wireless signal between nodes.

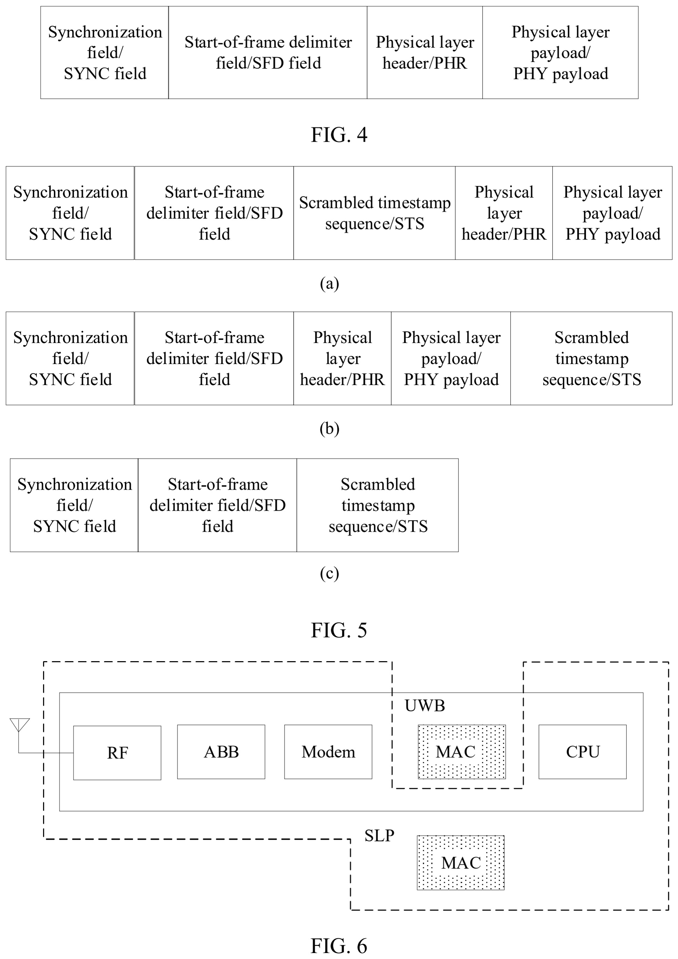

FIG. 4 shows a structure of a UWB frame. The UWB frame includes a synchronization header (synchronization header, SHR), a physical layer header (physical layer header, PHR), and a physical layer payload (PHY payload). The PHY payload includes data exchanged with a receiving device in the UWB frame. The PHY payload further includes a frame control (frame control) field, and the frame control field may be used to identify that the UWB frame is a beacon frame, a data frame, or an acknowledge (acknowledge, ACK) frame. The beacon frame may be considered as a type of UWB frame.

The SHR may be used by a device that receives the UWB frame to perform channel estimation, synchronization between devices/nodes in the system shown in FIG. 1, positioning and ranging between devices, and the like. The SHR may include a synchronization (synchronization, SYNC) field and a start-of-frame delimiter (start-of-frame delimiter, SFD) field. The SYNC field may be used for channel estimation, synchronization between devices, positioning and ranging, and the like. The SFD field may be used by the receiving device to determine a start position of the PHR in the UWB frame. For example, when detecting the SFD field, the receiving device may determine that the SFD field is followed by the PHR part in the UWB frame, and the receiving device may decode the PHR in the UWB frame and the PHY payload after the PHR. The PHR is located after the SHR, and the PHR may be used by the receiving device to correctly decode the UWB frame.

To further enhance security of time measurement, a scrambled timestamp sequence (scrambled timestamp sequence, STS) is introduced in the 802.15.4z standard. The STS is a pseudo-random sequence, and only a specific receiver device (for example, a UWB device) can learn of the STS. The receiver device performs a correlation operation based on the STS and a received UBW frame/UWB signal, and estimates, based on a peak position in a correlation result obtained through the correlation operation, time of arrival information of arrival of the UBW frame/UWB signal at the receiver device. Optionally, the UBW frame may include an STS. The STS may be placed before or after the PHY payload, or may replace the PHY payload and exist alone. For example, as shown in (a) in FIG. 5 to (c) in FIG. 5, in (a) in FIG. 5, the STS is before the PHR and the PHY payload. In (b) in FIG. 5, the STS is after the PHY payload. In (c) in FIG. 5, the UWB frame includes the STS but does not include the PHY payload.

In a ranging process based on a UWB technology, in a ranging round, a UWB network parameter, a ranging signal, a ranging response signal, and the like are sequentially exchanged based on the UWB frame. However, the UWB signal occupies a long period of time, and power consumption is large. In addition, because power spectral density of the UWB is limited, a transmit power of the UWB signal is limited, and a distance that can be measured is limited.

In this embodiment of this application, a parameter used for ranging is carried in a narrowband signal, and a sequence used for ranging is carried in a wideband signal. According to this embodiment of this application, an operating time of the wideband signal in the ranging process can be reduced, thereby reducing power consumption of a node. It should be noted that, in this embodiment of this application, the wideband signal and the narrowband signal are relative. For example, the narrowband signal may be referred to as a first bandwidth signal, the wideband signal may be referred to as a second bandwidth signal, and a bandwidth occupied by the second bandwidth signal is greater than a bandwidth occupied by the first bandwidth signal.

A communication method provided in embodiments of this application may be applied to synchronization, ranging, and positioning scenario, and the like, for example, applied to industrial workshop positioning, mobile phone ranging, and article searching. For ease of description, unless otherwise specified, an example in which the communication method provided in embodiments of this application is applied to the ranging system shown in FIG. 1 is used below. It should be noted that a quantity of nodes in the communication system shown in FIG. 1 is merely an example, and is not intended to limit this application. A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

For example, the solutions provided in embodiments of this application may be applied to sparklink positioning (sparklink positioning, SLP). Sparklink (sparklink or nearlink) includes at least one of sparklink low energy (sparklink low energy, SLE), sparklink basic (sparklink basic, SLB), or sparklink positioning (sparklink positioning, SLP). It may be understood that in this specification, a management node may be a node G in a sparklink system, and a secondary node is a node T in the sparklink system.

In embodiments of this application, some modules of the UWB and the SLP may be reused, so that chip costs, an area, and power consumption can be reduced. Chip resources can be highly reused, and a plurality of chips can be quickly iterated.

The UWB and SLP can share a set of radio frequency architectures and channels. FIG. 6 is a diagram of a chip architecture according to an embodiment of this application. It can be learned from FIG. 6 that, through a design, a central processing unit (central processing unit, CPU), a radio frequency (radio frequency, RF) unit, an analog baseband (analog baseband, ABB) unit, or a modem (Modem) share resources, and some modules at a media access control (media access control, MAC) layer can be reused, thereby saving a chip area and reducing chip costs and power consumption.

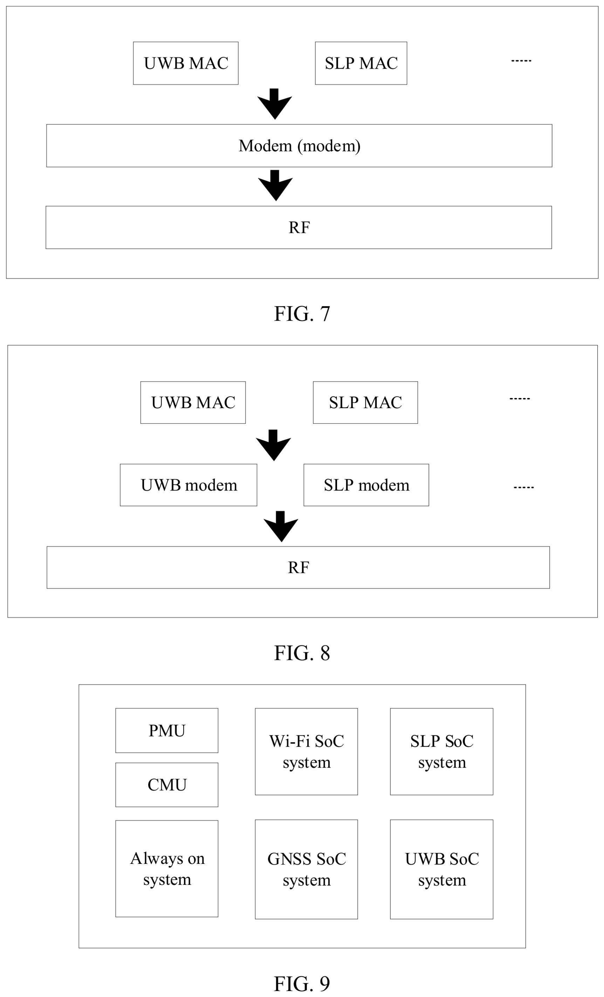

FIG. 7 is a diagram of another chip architecture according to an embodiment of this application. It can be learned from FIG. 7 that a MAC unit of a UWB and a MAC unit of SLP are separately implemented, and an RF unit and a modem unit are shared by all modes.

FIG. 8 is a diagram of still another chip architecture according to an embodiment of this application. It can be learned from FIG. 8 that, a MAC unit of a UWB and a MAC unit of SLP are separately implemented, a modem of the UWB and a modem of the SLP are also separately implemented, and an RF unit is shared by all modes.

An SLP chip can use a 14/28/40 nm process, is packaged by using a chip size package (chip size package, CSP), a ball grid array (ball grid array, BGA) package, a quad flat no-lead (quad flat no-lead, QFN) package, or the like, and uses built-in or external flash memory (flash memory). According to an application scenario, at least one of subsystems such as a power management module (power management unit, PMU), a clock management unit (clock management unit, CMU), an active optical network (active optical network, AON), a wireless local area network (wireless local area network, WLAN), or a UWB, SLP, a global navigation satellite system (global navigation satellite system, GNSS), an application (application, APP), and an audio (audio) may be selected to be placed on one chip, to minimize an area, maximize a function, and improve performance and reliability.

Embodiments of this application provide a chip design manner. SLP and another subsystem are integrated into one chip. A subsystem of the chip can be trimmed and combined based on different products. Different subsystems are connected through a bus.

FIG. 9 is a diagram of a chip module framework according to an embodiment of this application. It can be learned from FIG. 9 that, for a product that needs a functional module such as Wi-Fi or GNSS and has both a UWB and SLP, different systems of a UWB system and an SLP system may be obtained through division, and then combined with a Wi-Fi system, a GNSS system, an always on system (Always On System), a PMU, a CMU, a flash memory, and the like into one chip. Different subsystems are connected through a bus.

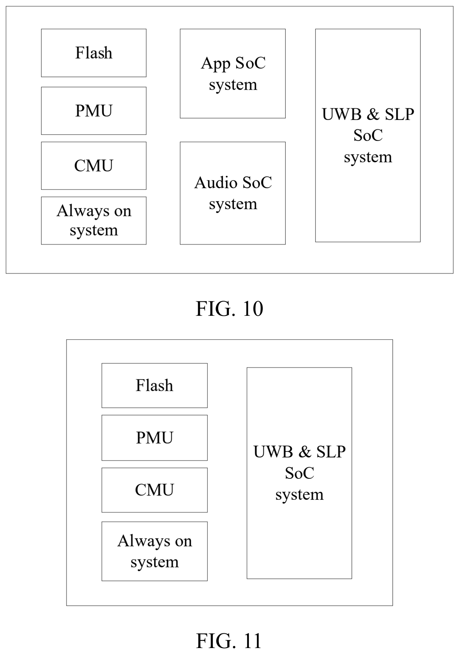

FIG. 10 is a diagram of another chip module framework according to an embodiment of this application. It can be learned from FIG. 10 that, for a terminal-side device that does not need a functional module such as Wi-Fi or GNSS but needs an audio function, to save an area and costs, a UWB and SLP may be combined into one subsystem, and then combined with an app system, an audio system, an always on system, a PMU, a CMU, a flash, and the like into one chip. Different subsystems are connected through a bus.

FIG. 11 is a diagram of still another chip module framework according to an embodiment of this application. It can be learned from FIG. 11 that, for a terminal-side device that neither needs a functional module such as Wi-Fi or GNSS nor needs an audio function, to save an area and costs, a UWB and SLP may be combined into one subsystem, and then combined with an always on system, a CMU, a PMU, a flash, and the like into one chip. Different subsystems are connected through a bus.

A service slot may be allocated to SLP and a UWB in a same core through software scheduling, and SLP and UWBs in different cores are not scheduled in a unified manner.

An embodiment of this application provides an SLP/UWB coexistence solution. Based on whether the SLP and the UWB share an antenna, coexistence scenarios include cross-antenna coexistence (using different antennas) and shared-antenna coexistence (using a same antenna), and different coexistence policies are provided.

For cross-antenna coexistence, if the SLP and the UWB coexist, it may be ensured that transmit and receive frequencies of the SLP and the UWB are different (that is, frequency division multiplexing is performed). Software may perform processing in terms of a frequency hopping sequence (namely, code division multiplexing), a service period, and an interval (namely, time division multiplexing).

In a case of shared-antenna coexistence, a software static policy or a hardware arbitration time division (packet traffic arbitration, PTA) policy may be used. Advantages of the software static policy are a small hardware requirement, a small software modification amount, and no dynamic radio frequency (radio frequency, RF) switching (for example, an operation such as RF restoration). Advantages of the PTA policy are faster service state switching and a smaller switching time granularity.

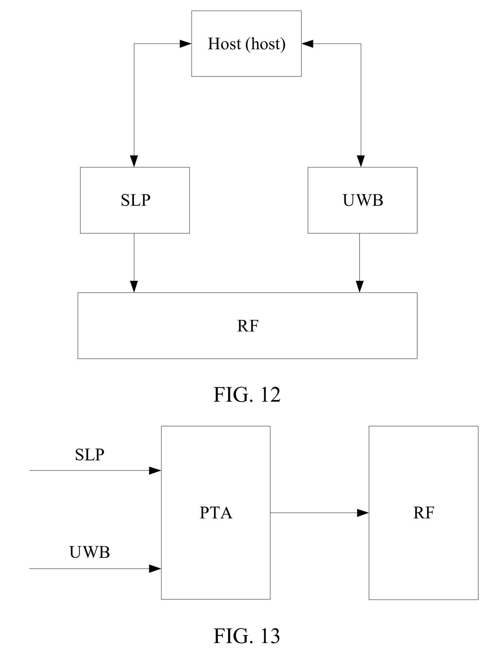

An example in which SLP and a UWB coexist is used. FIG. 12 is a diagram of a framework of a software static policy according to an embodiment of this application. It can be learned from FIG. 12 that, the software static policy may include: after the SLP is started, software is used to configure a host (HOST) to notify the UWB to exit a current radio frequency channel. In this scenario, the UWB may view an SLP enable flag, and the software may set a current radio frequency channel to switch to another radio frequency channel. A chip needs to support software setting switching.

For example, FIG. 13 is a diagram of a framework of a hardware arbitration time division (PTA) policy according to an embodiment of this application. It can be learned from FIG. 13 that, the hardware arbitration time division (PTA) policy includes: Time division is performed through any combination of transmit (TX) and receive (RX) of each party. A PTA module transmits an occupation status of a radio frequency channel to each party, uses different level signals to indicate that the radio frequency channel is occupied by SLP/a UWB, and notifies, by using this signal, software or hardware to perform corresponding processing. Different services may be configured with different PTA priorities. A service with a higher priority may preempt air interface resources.

For sparklink, an asynchronous data link and a synchronous data link are defined in a sparklink standard. The asynchronous link includes an asynchronous unicast link and an asynchronous multicast link, and the synchronous link includes a synchronous unicast link, a synchronous multicast link, and a synchronous broadcast link. In embodiments of this application, a set of SLP link selection solutions is designed based on different data real-time requirements of different products. Different data links may be used for connections between different devices in different scenarios, to support requirements of different product application scenarios.

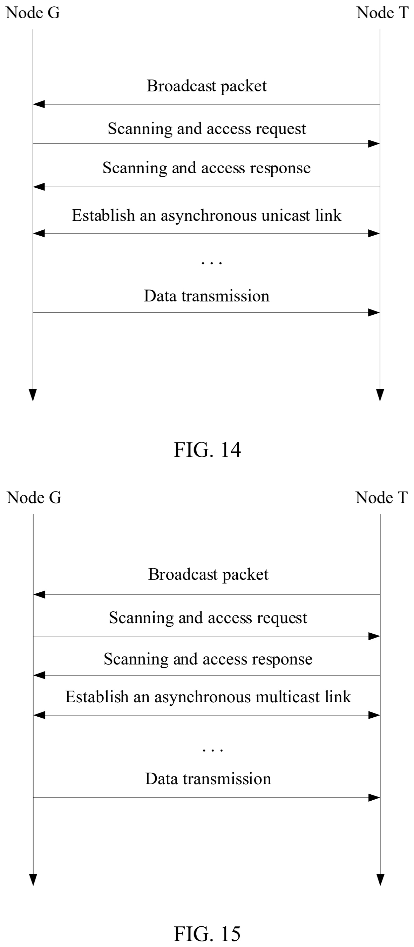

FIG. 14 is a schematic flowchart of a type of link establishment according to an embodiment of this application. As shown in FIG. 14, a node T sends a broadcast packet to a node G, and then the node G sends a scanning and access request to the node T. Further, the node T sends a scanning and access response to the node G, and then the node G and the node T establish an asynchronous unicast link, and perform data transmission through the established asynchronous unicast link.

FIG. 15 is a schematic flowchart of another type of link establishment according to an embodiment of this application. As shown in FIG. 15, a node T sends a broadcast packet to a node G, and then the node G sends a scanning and access request to the node T. Further, the node T sends a scanning and access response to the node G, and then the node G and the node T establish an asynchronous multicast link, and perform data transmission through the established asynchronous multicast link.

For a product (for example, a non-audio device such as a keyboard, a mouse, or a stylus) or a service that has no data real-time requirement (that is, a delay requirement (or a service delay) of the product or the service is greater than a first value), the asynchronous unicast link shown in FIG. 14 or the asynchronous multicast link shown in FIG. 15 may be established for data transmission.

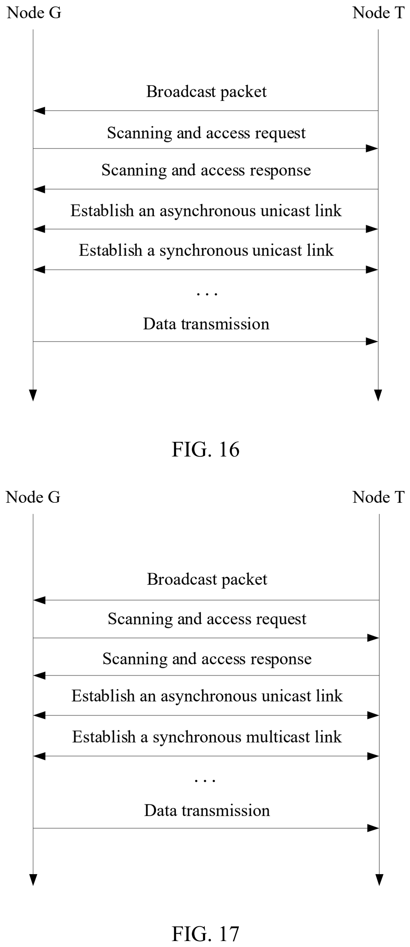

FIG. 16 is a schematic flowchart of still another type of link establishment according to an embodiment of this application. As shown in FIG. 16, a node T sends a broadcast packet to a node G, and then the node G sends a scanning and access request to the node T. Further, the node T sends a scanning and access response to the node G, and then the node G and the node T establish an asynchronous unicast link, then establish a synchronous unicast link, and perform data transmission through the established synchronous unicast link.

FIG. 17 is a schematic flowchart of still another type of link establishment according to an embodiment of this application. As shown in FIG. 17, a node T sends a broadcast packet to a node G, and then the node G sends a scanning and access request to the node T. Further, the node T sends a scanning and access response to the node G, and then the node G and the node T establish an asynchronous unicast link, then establish a synchronous multicast link, and perform data transmission through the established synchronous multicast link.

For a product (for example, an audio device such as a headset or a microphone) or a service that has a data real-time requirement (that is, a delay requirement of the product or the service is less than a second value), as shown in FIG. 15 or FIG. 16, an asynchronous unicast link may be established, and then a synchronous unicast link or a synchronous multicast link is established for data transmission.

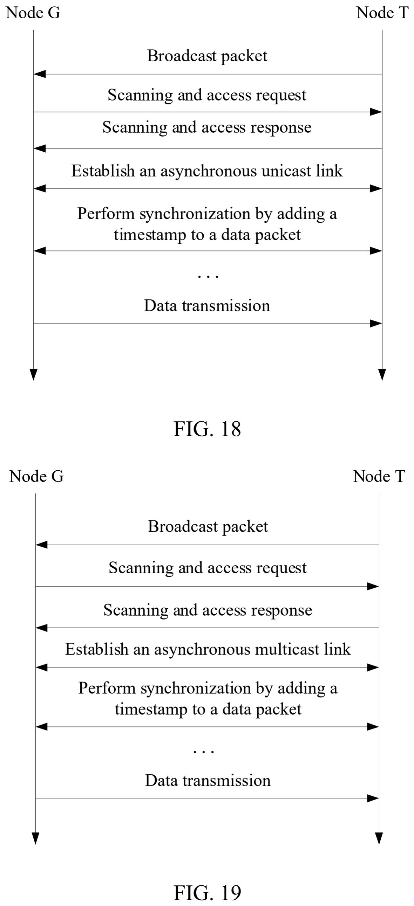

FIG. 18 is a schematic flowchart of still another type of link establishment according to an embodiment of this application. As shown in FIG. 18, a node T sends a broadcast packet to a node G, and then the node G sends a scanning and access request to the node T. Further, the node T sends a scanning and access response to the node G, and then the node G and the node T establish an asynchronous unicast link, and perform data transmission after synchronization is implemented by adding a timestamp to a data packet.

FIG. 19 is a schematic flowchart of still another type of link establishment according to an embodiment of this application. As shown in FIG. 19, a node T sends a broadcast packet to a node G, and then the node G sends a scanning and access request to the node T. Further, the node T sends a scanning and access response to the node G, and then the node G and the node T establish an asynchronous multicast link, and perform data transmission after synchronization is implemented by adding a timestamp to a data packet.

For a product (for example, an audio device such as a headset or a live microphone) or a service that has a data real-time requirement but does not have a particularly high real-time requirement (that is, a delay requirement of the product or the service is less than a first value and greater than a second value), an asynchronous unicast link or an asynchronous multicast link may also be established, and synchronization is implemented by adding a timestamp to a data packet.

In consideration of problems such as high costs, high complexity, and high power consumption of a current UWB chip, an embodiment of this application provides a wideband chip. The wideband chip is connected to a narrowband chip through an interface. The wideband chip may include at least one of a UWB chip and an SLP chip. The narrowband chip may include at least one of a Bluetooth chip, a Wi-Fi chip, an SLE chip, and an SLB chip.

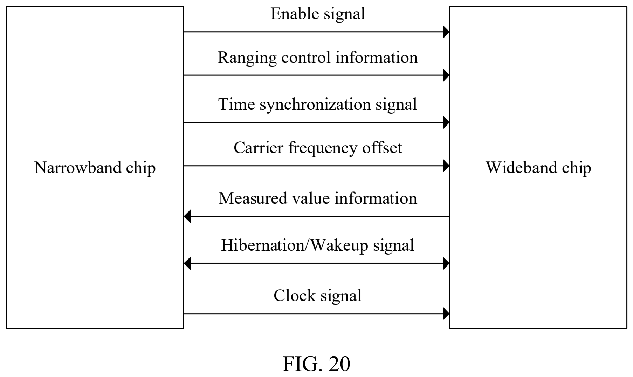

As shown in FIG. 20, there may be an interface between the narrowband chip and the wideband chip, for example, a general-purpose input/output (general-purpose input/output, GPIO) interface or a universal asynchronous receiver/transmitter (universal asynchronous receiver/transmitter, UART) interface. When the narrowband chip needs to operate with the wideband chip, the narrowband chip may send an enable signal to the wideband chip. In this way, the wideband chip can be powered on and start to work. In a low power consumption scenario, the narrowband chip may further implement functions such as hibernation and wakeup of the wideband chip through the interface (for example, the GPIO interface or the UART interface) between the narrowband chip and the wideband chip; or the wideband chip may also implement functions such as hibernation and wakeup of the narrowband chip through the interface (for example, the GPIO interface or the UART interface) between the wideband chip and the narrowband chip.

In addition, the narrowband chip may send ranging control information to the wideband chip. For example, first, through inter-system negotiation (for example, network establishment and ranging control negotiation is first completed between a narrowband chip of a receiving device and a narrowband chip of a sending device), the narrowband chip sends the ranging control information to the wideband chip through an inter-chip communication interface, and then the wideband chip starts ranging. In an implementation, a ranging process of the wideband chip may be completed through double-sided two-way ranging (double-side two-way ranging, DS-TWR).

In an implementation, signal time synchronization (which may be coarse synchronization) is first performed between the narrowband chip of the receiving device and the narrowband chip of the sending device (for example, a node G and a node T). After the narrowband chip of the receiving device and the narrowband chip of the sending device are synchronized, the narrowband chip of the sending device may send a time synchronization signal (synchronization, SYNC) to a wideband chip of the sending device, so that time synchronization (which may be fine synchronization) is performed between the wideband chip of the sending device and a wideband chip of the receiving device; and/or the narrowband chip of the receiving device may send a time synchronization signal to a wideband chip of the receiving device, so that time synchronization is performed between the wideband chip of the receiving device and the wideband chip of the sending device. In this manner, coarse synchronization between the receiving device and the sending device may be first implemented through the narrowband chips, and then fine synchronization between the receiving device and the sending device may be implemented through the wideband chips, so that receiving and sending synchronization can be better implemented, and costs of the wideband chip can also be reduced.

In an implementation, after sending the time synchronization signal to the wideband chip, the narrowband chip may send a carrier frequency offset (carrier frequency offset, CFO) to the wideband chip through an interface.

In an implementation, a wideband chip of a device may send measured value information to a peer device through a narrowband chip of the device. For example, the wideband chip of the sending device may send measured value information to the narrowband chip of the sending device through an interface, the narrowband chip of the sending device sends the measured value information to the narrowband chip of the receiving device, and the narrowband chip of the receiving device sends the measured value information to the wideband chip of the receiving device. The measured value information may be information used to calculate a time of flight (time of flight, TOF). The measured value information may also be a ranging time window.

In an implementation, the narrowband chip may provide a crystal oscillator (crystal oscillator, XO) signal for the wideband chip. The XO signal may be used as a clock signal of the wideband chip.

Solutions in at least one embodiment in FIG. 6 to FIG. 20 in this application may be combined with each other. To be specific, a device or a chip has or meets the solutions in the at least one embodiment in FIG. 6 to FIG. 20.

According to the technical solution of the wideband chip designed in the foregoing embodiments, normal operation of the wideband chip is ensured through interaction and an interface design between the narrowband chip and the wideband chip. A function of the narrowband chip is used in communication, and a function of the wideband chip is directly used in ranging, so that an ultra-wideband application is available according to a requirement, and a capability of the narrowband chip is used in data transmission, thereby achieving technical effects such as low complexity and low power consumption.

The apparatus shown in at least one embodiment in FIG. 6 to FIG. 20 in this application may be applied to measure a distance between two nodes, or may be applied to simultaneously measure a distance between a plurality of nodes. Alternatively, the node in embodiments of this application may include (or be) the apparatus shown in the at least one embodiment in FIG. 6 to FIG. 21. It may be understood that before different nodes perform ranging, each node may apply for joining a network, contend for accessing the network, and complete networking with another node. After a plurality of nodes are networked, a management node may allocate a ranging time unit to each secondary node, and each secondary node performs a ranging process in a ranging time unit of each secondary node. The ranging time unit may be referred to as a ranging round, a ranging period, or the like, and a specific name is not limited.

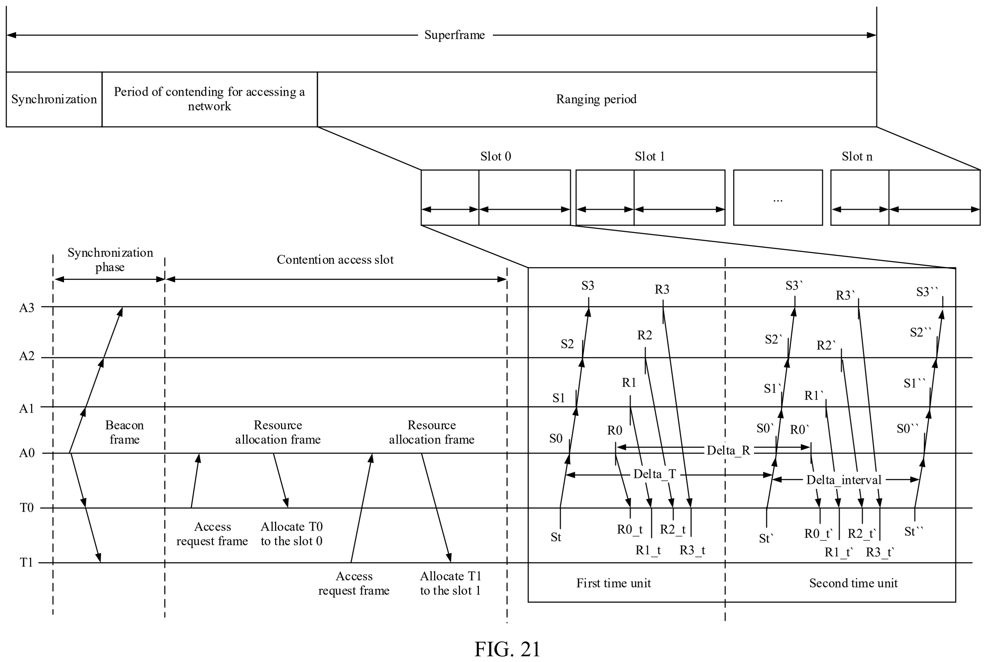

For ease of understanding, FIG. 21 shows a ranging system including a node T0, a node T1, and a node A0 to a node A3. Ranging may be performed between any two of the node T0, the node T1, and the node A0 to the node A3. For ease of description, an example in which A0 serves as a management node is used in this embodiment of this application. The node A0 may initially broadcast a beacon (beacon) frame in a synchronization period. Any node receives the beacon frame, and implements time synchronization with the node A0 based on the beacon frame. As shown in FIG. 21, the node T0, the node T1, and a node A1 to the node A3 may scan a beacon frame from the node A0. Any node receives the beacon frame, may determine a carrier frequency offset (carrier frequency offset, CFO) between the node and the node A0 based on the beacon frame, and implements time synchronization with the node A0 based on the CFO.

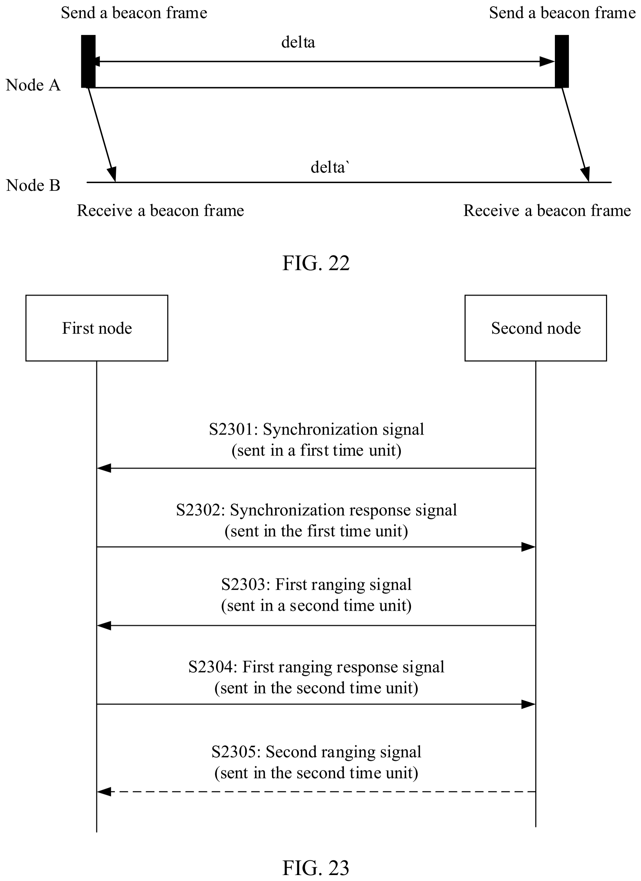

The CFO between the two nodes may be a clock offset between receiving and sending of the two nodes. As shown in FIG. 22, a node A periodically sends a beacon frame after duration delta based on a clock count of the node A, and a node B receives the beacon frame after duration delta' based on a clock count of the node B. A clock offset rate $clock_{freq}$ between the node A and the node B meets $clock_{freq} = \frac{delta}{delta'}$ .

The beacon frame sent by the node A0 may further include a network parameter, and another node may implement networking with the node A0 based on the network parameter, and perform a ranging process after networking. The network parameter may include one or more of the following: network access time information or ranging duration information. The network access time information indicates a period (which may be briefly referred to as a contention access period) of contending for accessing a network, and the period is a period in which a node that requests to join a network in which the node A0 is located contends for accessing the network. The ranging duration information may be a ranging period shared by a plurality of nodes, and ranging duration of each node may be a part of the ranging period.

Duration occupied by each of the synchronization period, the contention access period, and the ranging period may be predefined, or may be configured. In addition, the duration occupied by the synchronization period, the contention access period, and the ranging period is independent of each other and has no constraint relationship with each other. This may be specifically determined according to an actual requirement. For example, if ranging needs to be performed for a large quantity of nodes, duration occupied by the contention access period is long, to ensure, as much as possible, that the node for which ranging needs to be performed can join a network as early as possible; or if ranging needs to be performed for a small quantity of nodes, duration occupied by the contention access period is short, to save resources. Similarly, if ranging needs to be performed for a large quantity of nodes, the ranging period may be long, to meet, as much as possible, duration required by ranging of each node; or if ranging needs to be performed for a small quantity of nodes, the ranging period may be short, to save resources.

After being time-synchronized with the node A0, the node T0, the node T1, and the node A1 to the node A3 may request to join, in the contention access period, the network in which the node A0 is located. In FIG. 21, the node T0 and the node T1 request to join the network in which the node A0 is located. The node T0 sends an access request frame to the node A0 in the contention access period. The node A0 receives the access request frame from the node T0 (or the node T0 successfully contends for communication with the node A0), and then the node A0 adds the node T0 to a node list. The node list includes all nodes that are networked. Similar to the node T0, the node T1 also sends an access request frame to the node A0 in the contention access period, and after the node T1 successfully contends for communication with the node A0, the node A0 adds the node T1 to the node list.

The node A0 further allocates respective ranging time units to the node T0 and the node T1 that are to access the network. The time unit in this embodiment of this application is a period of time, and a size of one time unit is not limited. For example, one time unit may be at least one slot, or may be at least one symbol. A ranging time unit of a node is a time unit used by the node to perform ranging. In the ranging time unit, nodes may exchange signals/information used for ranging. For ease of description, an example in which one ranging time unit is one slot is used in this embodiment of this application.

For any secondary node, the management node may allocate one or more idle time units in the ranging period to the secondary node. The node T0 and the node T1 are used as an example. It is assumed that a beacon frame includes ranging duration information, the ranging duration information may include a quantity N of ranging time units, and a ranging time unit 0 (for example, a slot 0 in FIG. 21) and a ranging time unit 1 (for example, a slot 1 in FIG. 21) in the N ranging time units are idle. The node A0 may allocate the slot 0 to the node T0, and allocate the slot 1 to the node T1.

A specific implementation in which the management node allocates the ranging time unit to each secondary node is not limited in this embodiment of this application. The following lists two possible implementations.

Implementation 1: The management node allocates the ranging time unit to one secondary node through one piece of signaling.

For each secondary node, the management node separately sends a resource allocation frame. The resource allocation frame includes identification information of the secondary node and information about a ranging time unit allocated to the secondary node. The node T0 is used as an example. The resource allocation frame includes information about the slot 0. The node T1 is used as an example. The resource allocation frame includes information about the slot 1. In FIG. 21, Implementation 1 is used as an example.

Implementation 2: The management node allocates the ranging time unit to a plurality of secondary nodes through one piece of signaling.

For the plurality of secondary nodes, the management node may allocate a shared ranging period to the plurality of secondary nodes, and indicate a position relationship between a ranging time unit allocated to each secondary node and the shared ranging period, to indicate the ranging time unit allocated to each secondary node. For example, the node T0 is used as an example. A resource allocation frame sent by the management node indicates n slots, where n is an integer greater than 1. The n slots are a ranging period shared by the plurality of secondary nodes. The resource allocation frame further includes a position of the slot 0 allocated to the node T0 in the n slots, to indicate a ranging time unit allocated to the node T0.

Each secondary node may perform a ranging process in the allocated ranging time unit. In this embodiment of this application, a ranging time unit of a node may be divided into at least two parts. The node T0 in FIG. 21 is used as an example. The ranging time unit (namely, the slot 0) of the node T0 may include a first time unit and a second time unit. The first time unit is configured to send a narrowband signal, and the second time unit is configured to send a wideband signal. It should be noted that, in this embodiment of this application, the wideband signal and the narrowband signal are relative. For example, the narrowband signal may be referred to as a first bandwidth signal, the wideband signal may be referred to as a second bandwidth signal, and a bandwidth occupied by the second bandwidth signal is greater than a bandwidth occupied by the first bandwidth signal. In a ranging process, the node T0 may exchange, in the first time unit by using the narrowband signal, a parameter (for example, a synchronization signal) used for ranging, and use, in the second time unit, the wideband signal to carry a sequence used for ranging. In this way, an operating time of the wideband signal in the ranging process can be reduced, thereby reducing power consumption of a node T0.

Further, the node T0 may further report, to the node A0 by using the narrowband signal, a measured value used to determine a distance between the node T0 and the node A0, to further reduce the operating time of the wideband signal, and further reduce energy consumption of the node T0. For example, the ranging time unit further includes a third time unit, and the node T0 sends the measured value in the third time unit.

The management node may allocate the ranging time unit to each secondary node, and the first time unit, the second time unit, and even the third time unit included in the ranging time unit. For example, the management node may send a control signal. The control signal includes one or more of the following: network access time information or ranging duration information, and the ranging duration information includes one or more of the following: a quantity N of ranging time units, duration occupied by the ranging time unit, duration occupied by the first time unit, duration occupied by the second time unit, or duration occupied by the third time unit. The control signal may be the resource allocation frame shown in FIG. 21, and the control signal is the first bandwidth signal, to reduce the operating time of the wideband signal. It should be noted that the duration occupied by the first time unit is duration occupied by the first time unit in a ranging time unit of a second node. Similarly, the duration occupied by the second time unit is duration occupied by the second time unit in the ranging time unit of the second node. The duration occupied by the third time unit is duration occupied by the third time unit in the ranging time unit of the second node.

For example, the management node may broadcast the network access time information and the ranging duration information by using a beacon frame in the synchronization period. In other words, the control signal may be the beacon frame in the synchronization period. The ranging duration information may include one or more of the following: a quantity N of ranging time units, duration occupied by the ranging time unit, duration occupied by the first time unit, duration occupied by the second time unit, or duration occupied by the third time unit. For example, duration occupied by one ranging time unit, the duration occupied by the first time unit, the duration occupied by the second time unit, and the duration occupied by the third time unit may be predefined, and the ranging duration information may include the quantity N of ranging time units. For another example, the duration occupied by the first time unit and the duration occupied by the second time unit, or the duration occupied by the third time unit may be predefined. The ranging duration information may include the quantity N of ranging time units and the duration occupied by the ranging time units.

The following describes the technical solutions provided in embodiments of this application with reference to FIG. 21 and the foregoing content.

FIG. 23 is a schematic flowchart of an example communication method according to an embodiment of this application. The communication method provided in FIG. 23 relates to interaction between a plurality of communication apparatuses, and the plurality of communication apparatuses include a ranging initiation apparatus and at least one ranging response apparatus. For ease of description, an example in which the ranging initiation apparatus is a first node and the ranging response apparatus is a second node is used for description. Steps performed by the first node may be implemented by the first node, or may be implemented by a component (for example, a processing chip or a software module) in the first node. For example, if the first node is a network device, the steps performed by the first node may be implemented by the network device, or may be implemented by the component (for example, modules such as a control board (chip), a baseband chip, another processing unit, or a processor) in the network device. Steps performed by the second node may be implemented by the second node, or may be implemented by a component (for example, a processing chip or a software module) in the second node. For example, the second node is a terminal device, and steps performed by the second node may be implemented by the terminal device, or may be implemented by the component (for example, a chip, a processing unit, or a processor) in the terminal device.

In this embodiment of this application, "when", "if", and "in a case of" mean that an apparatus performs corresponding processing in an objective situation, are not intended to limit time, do not require the apparatus to necessarily have a determining action during implementation, and do not mean another limitation. "In a case of" and "if" can be replaced. Unless otherwise specified, "when" and "in a case in which" can be replaced. A "synchronization signal" is also referred to as a "synchronization frame/Sync frame/synchronization sequence".

An example in which the communication method shown in FIG. 23 is applied to the system shown in FIG. 21 is used. In FIG. 21, a node T1 is similar to a node T0. In other words, for A0, roles of the node T1 and the node T0 are the same, and a ranging process between the node T1 and the node A0 is similar to a ranging process between the node T0 and the node A0. Similarly, a node A1 to a node A3 and the node A0 have a same role. A ranging process between the node T0/the node T1 and the node A1/A2/A3 is similar to a ranging process between the node T0/the node T1 and the node A0. For the node A0, the node T0 and the node T1 belong to a same synchronous (Sync) group. Alternatively, a plurality of secondary nodes may form a sync group. For the sync group, a management node may send a signal to each secondary node in the sync group through broadcasting. The node A0 to the node A3 in a network may be anchors (nodes at known positions), and a sequence of sending signals by the node A0 to the node A3 may be specified in advance. For example, the node A0 to the node A3 sequentially send signals in a time sequence. In this way, the system shown in FIG. 21 operates in a time division multiple access (Time division multiple access, TDMA) manner, to avoid a conflict between receiving and sending signals by the nodes.

In FIG. 23, an example in which the first node is the node A0 in FIG. 21, and the second node is the node T0 in FIG. 21 is used. As shown in FIG. 23, a procedure of the communication method includes the following steps.

S2301: The second node sends a synchronization signal in a first time unit, where the synchronization signal is used for time synchronization between the first node and the second node, and the first time unit is configured to send a first bandwidth signal.

As shown in the figure, a ranging time unit of the second node is a slot 0, and the first time unit is included in the ranging time unit (namely, a slot 0) of the second node. The first bandwidth signal may be referred to as a narrowband signal. For example, the first bandwidth signal may be a Bluetooth signal, a near field communication (near field communication, NFC) signal, or the like. The first time unit is configured to send the first bandwidth signal, and the second node may exchange some parameters of a ranging process with the first node in the first time unit by using the first bandwidth signal. For example, the second node may send a synchronization signal to the first node in the first time unit, and the first node receives the synchronization signal, and performs time synchronization with the second node based on the synchronization signal, to improve ranging accuracy.

It may be understood that, the second node sends the synchronization signal, and a plurality of nodes in the network may receive the synchronization signal. FIG. 21 is used as an example. The node T0 sends a synchronization signal at a moment St; the node A0 receives the synchronization signal at a moment S0; the node A1 receives the synchronization signal at a moment S1; the node A2 receives the synchronization signal at a moment S2; and the node A3 receives the synchronization signal at a moment S3. The node A0 to the node A3 each implement time synchronization with the node T0 based on the received synchronization signal.

S2302: The first node sends a synchronization response signal to the second node in the first time unit in response to the synchronization signal.

Any node receives the synchronization signal from the second node, and may feed back a response signal (namely, a synchronization response signal) of the synchronization signal to the second node in response to the synchronization signal. Specifically, as shown in FIG. 21, the first node (namely, the node A0) sends the synchronization response signal at a moment R0; the node A1 sends a synchronization response signal at a moment R1; the node A2 sends a synchronization response signal at a moment R2; and the node A3 sends a synchronization response signal at a moment R3. Correspondingly, the node T0 receives the synchronization response signal from the node A0 at a moment R0_t; the node T0 receives the synchronization response signal from the node A1 at a moment R1_t; the node T0 receives the synchronization response signal from the node A2 at a moment R2_t; and the node T3 receives the synchronization response signal from the node A3 at a moment R3_t.

S2303: The second node sends a first ranging signal to the first node in a second time unit.

The first ranging signal may be used to measure a distance between the second node and the first node, and the first ranging signal is a second bandwidth signal. In this embodiment of this application, the second bandwidth signal may be a signal having a high multipath resolution capability, and can implement high-precision ranging.

For example, a bandwidth occupied by the second bandwidth signal may be greater than or equal to 499.2 MHz. For example, the bandwidth occupied by the second bandwidth signal may be equal to 500 MHz. In addition, the second bandwidth signal may be a nanosecond-level or picosecond-level pulse signal. For example, the second bandwidth signal may be a UWB signal, or the second bandwidth signal is a self-defined wideband signal. The second bandwidth signal is self-defined, so that a transmit power of the second bandwidth signal is large, thereby implementing ranging, positioning, and the like of a long-distance node.

For another example, a pulse repetition frequency of the second bandwidth signal may be within [16.1 MHz, 111.09 MHz], to reduce, as much as possible, duration occupied by a signal with a large bandwidth. For example, the pulse repetition frequency of the second bandwidth signal may be 16.1 MHz, 55.54 MHz, 62.4 MHz, 62.89 MHz, or 111.09 MHz.

In this embodiment of this application, a time interval, for example, first duration, between a moment at which the second node sends the first ranging signal and a moment at which the second node sends the synchronization signal may be specified/predefined. The example in FIG. 21 is still used. The node T0 sends the synchronization signal at the moment St, and sends the first ranging signal at a moment St'. St' and St are separated by the first duration. Correspondingly, a moment at which the first node receives the first ranging signal and a moment at which the first node receives the synchronization signal are also separated by the first duration. Alternatively, the first node may configure, for the second node based on a moment at which the first node receives the synchronization signal, a moment at which the second node sends the first ranging signal. In this way, after receiving the synchronization signal, the first node may turn off a receiver, and turn on the receiver at an interval of the first duration (or less than the first duration), to wait for receiving the first ranging signal. In this way, the first node does not need to always turn on the receiver, thereby reducing energy consumption of the first node.

The example in FIG. 21 is still used. The node T0 sends the first ranging signal at a moment St'; the node A0 receives the first ranging signal at a moment S0'; the node A1 receives the first ranging signal at a moment S1'; the node A2 receives the first ranging signal at a moment S2'; and the node A3 receives the first ranging signal at a moment S3'. The first duration may be Delta_T. When the node A0 receives the synchronization signal at the moment S0, the node A0 may turn on a receiver at S0+Delta _T. To prevent the node A0 from missing receiving the first ranging signal, the node A0 may turn on the receiver in preset duration before S0+Delta_T. In consideration that there is a CFO between the node T0 and the node A0, the node A0 may turn on the receiver at S0+Delta_T×CFO, or turn on the receiver in preset duration before S0+Delta_T×CFO. Similar to the node A0, the node A1 may turn on a receiver at S1+Delta _T, in preset duration before S1+Delta_T, at S1+Delta_TxCFO, or in preset duration before S1+Delta_T×CFO. The node A2 may turn on a receiver at S2+Delta_T, in preset duration before S2+Delta_T, at S2+Delta_T×CFO, or in preset duration before S2+Delta_TxCFO. The node A3 may turn on a receiver at S3+Delta_T, in preset duration before S3+Delta_T, at S3+Delta_T×CFO, or in preset duration before S3+Delta_T×CFO.

S2304: The first node sends a first ranging response signal to the second node in the second time unit.

The first node receives the first ranging signal from the second node, and may send the first ranging response signal to the second node in the second time unit in response to the first ranging signal.

A time interval between a moment at which the first node sends the first ranging response signal and a moment at which the first node sends the synchronization response signal may be specified. The example in FIG. 21 is still used. The node A0 sends a synchronization response signal at the moment R0, and sends a first ranging response signal at a moment R0'. R0' and R0 are separated by second duration (for example, Delta _R). Correspondingly, a moment at which the second node receives the first ranging response signal and a moment at which the second node receives the synchronization response signal are also separated by the second duration. For example, the node T0 receives the synchronization response signal at a moment R0_t, and receives the first ranging response signal at a moment R0_t'. R0_t' and R0_t are separated by the second duration. In this way, after receiving the synchronization response signal, the second node may turn off a receiver, and turn on the receiver at an interval of the second duration (or less than the second duration), to wait for receiving the first ranging response signal. In this way, the second node does not need to always turn on the receiver, thereby reducing energy consumption of the second node.

The example in FIG. 21 is still used. The node A0 sends a synchronization response signal at the moment R0, and sends a first ranging response signal at R0'. R0'=R0+Delta_R. The node T0 turns on a receiver at R0' or in preset duration before R0', and receives the first ranging response signal from the node A0 at the moment R0_t'. In consideration that there is a CFO between the node T0 and the node A0, the node T0 may turn on the receiver at R0+Delta_R×CFO or in preset duration before R0+Delta_R×CFO. Similarly, as shown in FIG. 21, the node A1 may turn on the receiver at R1+Delta_R, in preset duration before R1+Delta_R, at R1+Delta_R×CFO, or in preset duration before R1+Delta_R×CFO, and the node T0 receives the first ranging response signal from the node A1 at a moment R1_t'. The node A2 may turn on the receiver at R2+Delta_R, in preset duration before R2+Delta_R, at R2+Delta_R×CFO, or in preset duration before R2+Delta_R×CFO, and the node T0 receives the first ranging response signal from the node A2 at a moment R2_t'. The node A3 may turn on the receiver at R3+Delta_R, in preset duration before R3+Delta_R, at R3+Delta_R×CFO, or in preset duration before R3+Delta_R×CFO, and the node T0 receives the first ranging response signal from the node A3 at a moment R3_t'.

S2305: The second node sends a second ranging signal to the first node in the second time unit.

Similar to the first ranging signal, the second ranging signal is also a second bandwidth signal. A time interval between a moment at which the second node sends the second ranging signal and the moment at which the second node sends the first ranging signal may be specified. The example in FIG. 21 is still used. The node T0 sends the first ranging signal at the moment St', and sends the second ranging signal at a moment St''. St'' and St' are separated by third duration (for example, Delta_interval). Correspondingly, a moment at which the node A0 receives the second ranging signal and a moment at which the node A0 receives the first ranging signal are also separated by the second duration. For example, the node A0 receives the second ranging signal at a moment S0'', and receives the first ranging signal at the moment S0'. S0'' and S0' are separated by the second duration. In this way, after receiving the first ranging signal, the node A0 may turn off the receiver, and turn on the receiver at an interval of the third duration (or less than the third duration), to wait for receiving the second ranging response signal. In this way, the node A0 does not need to always turn on the receiver, thereby reducing energy consumption of the node A0.

The third duration may be Delta_interval, or may be Delta_interval×CFO. As shown in FIG. 21, the node A1 may turn on the receiver at S1'+Delta_interval, in preset duration before S1'+Delta_interval, at S1'+Delta_interval×CFO, or in preset duration before S1'+Delta_interval×CFO, and receive the second ranging signal at a moment S1''. The node A2 may turn on the receiver at S2'+Delta_interval, in preset duration before S2'+Delta_interval, at S2'+Delta_interval×CFO, or in preset duration before S2'+Delta _interval×CFO, and receive the first ranging response signal from the node A2 at a moment S2". The node A3 may turn on the receiver at S3'+Delta_interval, in preset duration before S3'+Delta_interval, at S3'+Delta_interval×CFO, or in preset duration before S3'+Delta_interval×CFO, and receive the second ranging signal at a moment S3''.

The node A0 and the node T0 may determine a time of flight TOF of a signal between the node A0 and the node T0, and the time of flight TOF meets the following formula:

$$TOF = \frac{(R_{0\_t}^` - S_t^`) \times (S_0^{``} - R_0^`) - (R_0^` - S_0^`) \times (S_t^{``} - R_{0\_t}^`)}{S_0^{``} - S_0^` + S_t^{``} - S_t^`}$$

A distance between the node A0 and the node T0 is a product of the time of flight TOF and a speed of light.

It may be understood that a time of flight TOF of the signal between the node T0 and the node An meets the following formula:

$$TOF_{T0-An} = \frac{(R_{n\_t}^` - S_t^`) * (S_n^{``} - R_n^`) - (R_n^` - S_n^`) * (S_t^{``} - R_{n\_t}^`)}{S_n^{``} - S_n^` + S_t^{``} - S_t^`}$$

It may be understood that, if positions of any two of the node A1 to the node A3 and a distance between the node T0 and the any two nodes are known, a position of the node T0 may be further determined. It can be learned, from a formula of calculating $TOF_{T0-An}$, that, the second ranging signal is sent by the node T0. To be specific, the distance between the node A0 and the node T0 is calculated through DS-TWR, without a need to consider a clock offset between nodes. This is simpler.

In the communication method shown in FIG. 23, in a ranging process between the node T0 and the node A0, the node T0 and the node A0 exchange a synchronization signal by using a narrowband signal in a ranging time unit, and exchange a ranging signal by using a wideband signal. Compared with a case in which the wideband signal is exchanged in the entire process, an operating time of the wideband signal in the ranging process is reduced, thereby reducing power consumption of the node T0 and the node A0.

Further, the second node may further report a measured value to the first node. For example, the second node may further send the measured value in the third time unit. The measured value is used to determine a distance between the first node and the second node. FIG. 21 is used as an example. The first node is A0, the second node is T0, and the measured value may include St' and R0_t'.

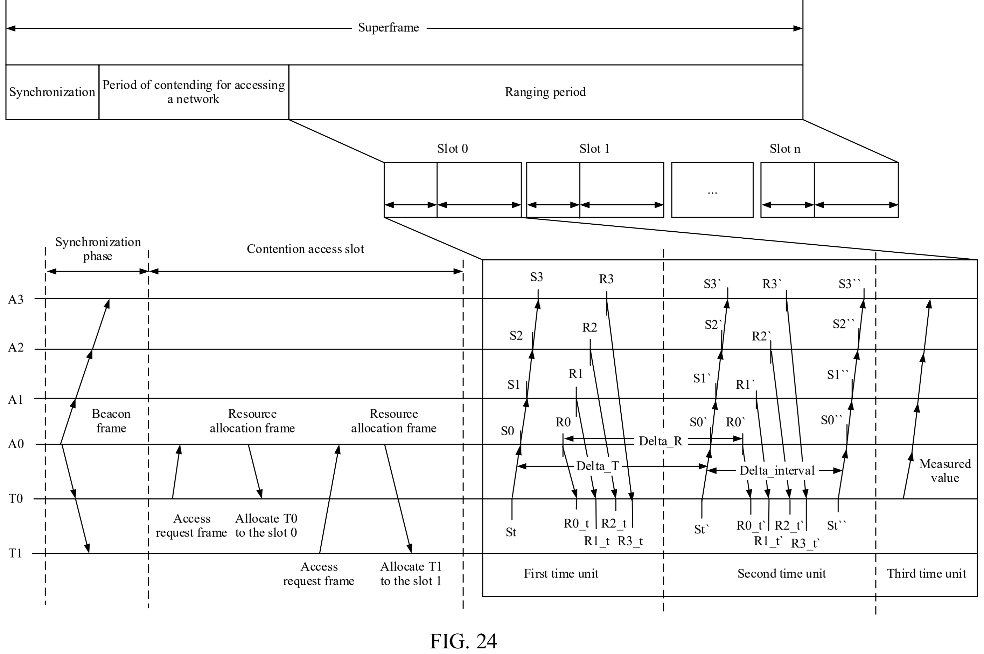

The third time unit is included in the ranging time unit the second node, and the third time unit is configured to send the first bandwidth signal, as shown in FIG. 24. The second node reports the measured value by using the narrowband signal, to further reduce the operating time of the wideband signal, and further reduce energy consumption of the node.

In this embodiment of this application, an example in which the second node sends the second ranging signal to the first node in the second time unit, and the first node calculates the time of flight of the signal between the first node and the second node based on a sending moment of the second ranging signal is used. In a possible implementation, the distance between the first node and the second node can still be calculated without a need to perform S2305. Therefore, S2305 is not a mandatory step, and is shown by using a dashed line in FIG. 23.

For example, the node T0 sends the first ranging signal at the moment St'; the node A0 receives the first ranging signal at the moment S0'; the node A0 sends the first ranging response signal at the moment R0'; and the node T0 receives the first ranging response signal from the node A0 at the moment R0_t'. In consideration that there is a clock offset between the node T0 and the node A0, a time of flight TOF of the signal between the node T0 and the node A0 meets the following formula:

$$TOF = \frac{1}{2}(1 - Tround - Treply - (1 - Coffs))$$

*Tround* is an interval between the moment at which the node T0 sends the first ranging signal and the moment at which the node T0 receives the first ranging signal, that is, *Tround*=R0_t'-St'; *Treply* is an interval between the moment at which the node A0 receives the first ranging signal and the moment at which the node A0 sends the first ranging response signal, that is, *Treply*= S0'-R0'; and $C_{offs}$ is a clock offset between the node A0 and the node T0.

In the foregoing embodiments provided in this application, the method provided in the embodiments of this application is described from a perspective of interaction between the first node and the second node. To implement functions in the methods provided in the foregoing embodiments of this application, the first node and/or the second node may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, a communication apparatus for implementing the foregoing method in embodiments of this application. Therefore, all the foregoing content may be used in the following embodiments. Repeated content is not described again.

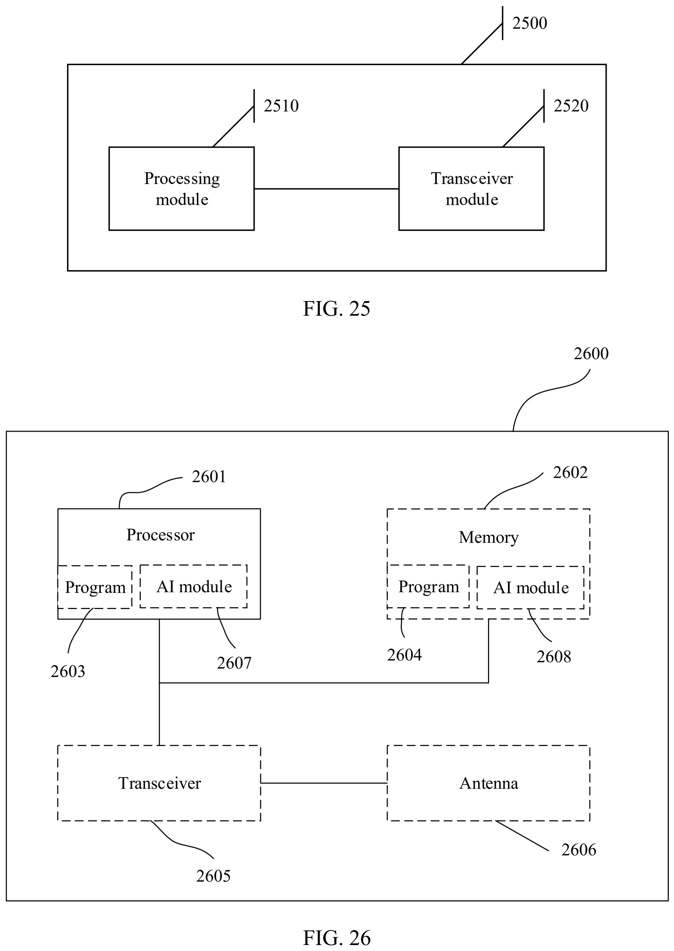

FIG. 25 is a block diagram of a communication apparatus 2500 according to an embodiment of this application. The communication apparatus 2500 may be the first node or the second node in the foregoing embodiments. For example, the communication apparatus 2500 may be the management node or the secondary node in FIG. 1. Alternatively, the communication apparatus 2500 is a chip (system) in the first node or the second node. Alternatively, the communication apparatus 2500 is a software module in the first node or the second node. The communication apparatus 2500 may correspondingly implement functions or steps implemented by the first node or the second node in the foregoing method embodiments. The communication apparatus 2500 may include a processing module 2510 and a transceiver module 2520. Optionally, the communication apparatus 2500 may further include a storage unit. The storage unit may be configured to store instructions (code or a program) and/or data. The processing module 2510 and the transceiver module 2520 may be coupled to the storage unit. For example, the processing module 2510 may read the instructions (the code or the program) and/or the data in the storage unit, to implement a corresponding method. The foregoing units may be independently disposed, or may be partially or completely integrated.

In a possible implementation, the processing module 2510 may be a processor or a controller, for example, may be a general-purpose central processing unit (central processing unit, CPU), a general-purpose processor, a digital signal processor (digital signal processor, DSP), an application-specific integrated circuit (application-specific integrated circuits, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 2520 is a transceiver, an interface circuit, a bus, a pin, or another possible communication interface, and is configured to receive a signal from another apparatus. For example, when the apparatus is implemented in a form of a chip, the transceiver module 2520 is an interface circuit used by the chip to receive a signal from another chip or apparatus, or is an interface circuit used by the chip to send a signal to another chip or apparatus.

The communication apparatus 2500 may further include a storage unit, and the storage unit may be a memory. The processing module 2510 may execute computer-executable instructions stored in the storage unit. When the communication apparatus 2500 serves as a chip in the first node or a chip in the second node, the storage unit may be a storage unit in the chip, for example a register or a cache. For example, the storage unit may also be a storage unit outside the chip in the first node or the second node, for example, a read-only memory (read-only memory, ROM), another type of static storage device that can store static information and instructions, or a random access memory (random access memory, RAM).

In some possible implementations, the communication apparatus 2500 can correspondingly implement behavior and functions of the first node in the foregoing method embodiments, for example, implement the method performed by the first node in the embodiment in FIG. 23. The communication apparatus 2500 may be the first node, or may be a component (for example, a chip or a circuit) applied to the first node, or may be a chip or a chip group in the first node, or a part of a chip that is configured to perform a related method function, or may be a software module that can implement the method performed by the first node in FIG. 23. This is not limited. For example, the transceiver module 2520 may be configured to perform S2301 to S2304 and S2305 in the embodiment shown in FIG. 23, and/or configured to support another process of the technology described in this specification. The processing module 2510 is configured to perform another process of the technology described in this specification.

In some embodiments, the transceiver module 2520 is configured to: receive a synchronization signal from a second node in a first time unit; send a synchronization response signal in the first time unit in response to the synchronization signal; receive a first ranging signal from the second node in a second time unit; and send a first ranging response signal in the second time unit in response to the first ranging signal. The synchronization signal is used for time synchronization between the communication apparatus 2500 and the second node. The first ranging signal is used to measure a distance between the communication apparatus 2500 and the second node. Both the first time unit and the second time unit are included in a ranging time unit of the second node, the first time unit is configured to send a first bandwidth signal, and the second time unit is configured to send a second bandwidth signal. A bandwidth occupied by the second bandwidth signal is greater than a bandwidth occupied by the first bandwidth signal. The processing module 2510 is configured to determine a time of receiving the first ranging signal.

In an optional implementation, the bandwidth occupied by the second bandwidth signal is greater than or equal to 500 MHz, and the second bandwidth signal is a nanosecond-level or picosecond-level pulse signal.

In an optional implementation, a pulse repetition frequency of the second bandwidth signal is within [16.1 MHz, 111.09 MHz].

In an optional implementation, a moment S0' at which the transceiver module 2520 receives the first ranging signal and a moment S0 at which the first node receives the synchronization response signal are separated by first duration, and the first duration is predefined or configured.

In an optional implementation, a sending moment R0' of the first ranging response signal and a sending moment R0 of the synchronization response signal are separated by second duration, and the second duration is predefined or configured.

In an optional implementation, the transceiver module 2520 is further configured to receive a second ranging signal from the second node in the second time unit.

In an optional implementation, a moment S0" at which the transceiver module 2520 receives the second ranging signal and the moment S0' at which the first node receives the first ranging signal are separated by third duration, and the third duration is predefined or configured.

In an optional implementation, a time of flight TOF of a signal between the communication apparatus 1000 and the second node meets the following formula:

$$TOF = \frac{(R_{0\_t}^{'} - S_t^{'}) \times (S_0^{''} - R_0^{'}) - (R_0^{'} - S_0^{'}) \times (S_t^{''} - R_{0\_t}^{'})}{S_0^{''} - S_0^{'} + S_t^{''} - S_t^{'}}$$

Herein, $S_t^{'}$ is a moment at which the second node sends the first ranging signal, $S_0^{'}$ is the moment at which the communication apparatus 2500 receives the first ranging signal, $S_t^{''}$ is the moment at which the second node sends the second ranging signal, $S_0^{''}$ is the receiving moment at which the communication apparatus 2500 receives the second ranging signal, $R_0^{'}$ is the moment at which the communication apparatus 2500 sends the first ranging response signal, and $R_{0\_t}^{'}$ is a moment at which the second node receives the first ranging response signal.

In an optional implementation, the transceiver module 2520 is further configured to receive a measured value from the second node in a third time unit. The third time unit is included in the ranging time unit of the second node, the third time unit is configured to send the first bandwidth signal, and the measured value includes a receiving time of the second ranging response signal.

In an optional implementation, the transceiver module 2520 is further configured to send a control signal. The control signal is the first bandwidth signal, the control signal includes one or more of the following: network access time information or ranging duration information, and the ranging duration includes one or more of the following: a quantity N of ranging time units, duration occupied by the ranging time unit, duration occupied by the first time unit, duration occupied by the second time unit, or duration occupied by the third time unit.

In some possible implementations, the communication apparatus 2500 can correspondingly implement behavior and functions of the second node in the foregoing method embodiments, for example, implement the method performed by the second node in the embodiment in FIG. 23. The communication apparatus 2500 may be the second node, or may be a component (for example, a chip or a circuit) applied to the second node, or may be a chip or a chip group in the second node, or a part of a chip that is configured to perform a related method function, or may be a software module that can implement the method performed by the second node in FIG. 23. This is not limited. For example, the transceiver module 2520 may be configured to perform S2301 to S2304 and S2305 in the embodiment shown in FIG. 23, and/or configured to support another process of the technology described in this specification. The processing module 2510 is configured to perform another process of the technology described in this specification.

In some embodiments, the transceiver module 2520 is configured to: send a synchronization signal in a first time unit; receive a synchronization response signal from a first node in the first time unit; send a first ranging signal in a second time unit; and receive a first ranging response signal from the first node in the second time unit. The synchronization signal is used for time synchronization between the first node and the communication apparatus 2500. The first ranging signal is used to measure a distance between the first node and the communication apparatus 2500. Both the first time unit and the second time unit are included in a ranging time unit of the second node, the first time unit is configured to send a first bandwidth signal, and the second time unit is configured to send a second bandwidth signal. A bandwidth occupied by the second bandwidth signal is greater than a bandwidth occupied by the first bandwidth signal. The processing module 2510 is configured to determine a time of receiving the first ranging response signal.

In an optional implementation, the bandwidth occupied by the second bandwidth signal is greater than or equal to 500 MHz, and the second bandwidth signal is a nanosecond-level or picosecond-level pulse signal.

In an optional implementation, a pulse repetition frequency of the second bandwidth signal is within [16.1 MHz, 111.09 MHz].

In an optional implementation, a sending moment St' of the first ranging signal and a sending moment St of the synchronization signal are separated by first duration, and the first duration is predefined or configured.

In an optional implementation, a moment R0_t' at which the transceiver module 2520 receives the first ranging response signal and a moment R0_t at which the second node receives the synchronization response signal are separated by second duration, and the second duration is predefined or configured.

In an optional implementation, the transceiver module 2520 is further configured to send a second ranging signal to the first node in the second time unit.

In an optional implementation, the sending moment St' of the second ranging signal and the sending moment St' of the first ranging signal are separated by third duration, and the third duration is predefined or configured.

In an optional implementation, a time of flight TOF of a signal between the first node and the communication apparatus 2500 meets the following formula:

$$TOF = \frac{(R_{0\_t}^{`} - S_t^{`}) \times (S_0^{``} - R_0^{`}) - (R_0^{`} - S_0^{`}) \times (S_t^{``} - R_{0\_t}^{`})}{S_0^{``} - S_0^{`} + S_t^{``} - S_t^{`}}$$

Herein, $S_t^{`}$ is a moment at which the second node sends the first ranging signal, $S_0^{`}$ is the moment at which the first node receives the first ranging signal, $S_t^{``}$ is the moment at which the second node sends the second ranging signal, $S_0^{``}$ is the receiving moment at which the first node receives the second ranging signal, $R_0^{`}$ is the moment at which the first node sends the first ranging response signal, and $R_{0\_t}^{`}$ is a moment at which the second node receives the first ranging response signal.

In an optional implementation, the transceiver module 2520 is further configured to send a measured value in a third time unit. The third time unit is included in the ranging time unit of the second node, and the third time unit is configured to send the first bandwidth signal.

In an optional implementation, the transceiver module 2520 is further configured to receive a control signal. The control signal is the first bandwidth signal, the control signal includes one or more of the following: network access time information or ranging duration information, and the ranging duration includes one or more of the following: a quantity N of ranging time units, duration occupied by the ranging time unit, duration occupied by the first time unit, duration occupied by the second time unit, or duration occupied by the third time unit.

When the communication apparatus 2500 is a chip-type apparatus or circuit, the transceiver module may be an input/output circuit and/or a communication interface, and the processing module is an integrated processor, a microprocessor, or an integrated circuit.

FIG. 26 is a block diagram of a communication apparatus 2600 according to an embodiment of this application. The communication apparatus 2600 may be the first node or the second node in the foregoing embodiments. For example, the communication apparatus 2600 may be the management node or the secondary node in FIG. 1. Alternatively, the communication apparatus 2600 is a chip (system) in the first node or the second node. In this embodiment of this application, the chip system may include a chip, or may include a chip and another discrete component. For a specific function, refer to the descriptions of the foregoing method embodiments.

The communication apparatus 2600 includes one or more processors 2601, configured to implement or support the communication apparatus 2600 to implement a function of the first node or the second node in the method provided in embodiments of this application. For details, refer to detailed descriptions in the method examples. Details are not described herein. The processor 2601 may also be referred to as a processing unit or a processing module, and may implement a specific control function. The processor 2601 may be a general-purpose processor, a dedicated processor, or the like. For example, the processor 2601 includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to control the communication apparatus 2600 (for example, the first node or the second node), and execute a software program and/or process data. Different processors may be independent devices, or may be integrated into one or more processors, for example, integrated into one or more application specific integrated circuits.

In a design, the processor 2601 may include a program 2603 (which may also be referred to as code or instructions sometimes). The program 2603 may be run on the processor 2601, so that the communication apparatus 2600 performs the method described in the foregoing embodiments. In another possible design, the communication apparatus 2600 includes a circuit (not shown in FIG. 26), and the circuit is configured to implement a function of the first node or the second node in the foregoing embodiments.

In a design, the communication apparatus 2600 may include one or more memories 2602. The memory 2602 stores a program 2604 (which may also be referred to as code or instructions sometimes). The program 2604 may be run on the processor 2601, so that the communication apparatus 2600 performs the method described in the foregoing method embodiments, for example, the procedure shown in FIG. 23.

In a design, the processor 2601 and/or the memory 2602 may include an artificial intelligence (artificial intelligence, AI) module 2607 and an AI module 2608. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 2601 and/or the memory 2602 may further store data. The processor and the memory may be separately disposed, or may be integrated together.

In a possible design, the communication apparatus 2600 may further include a transceiver 2605 and/or an antenna 2606. The processor 2601 may also be sometimes referred to as a processing unit, and controls the communication apparatus 2600. The transceiver 2605 sometimes may be referred to as a transceiver unit, a transceiver machine, a transceiver circuit, a transceiver, or the like, and is configured to implement a transceiver function of the communication apparatus through the antenna 2606.

In a possible design, the communication apparatus 2600 may further include one or more of the following components: a wireless communication module, an audio module, an interface for external memory, an internal memory, a universal serial bus (universal serial bus, USB) port, a power management module, an antenna, a speaker, a microphone, an input/output module, a sensor module, a motor, a camera, a display, or the like. It may be understood that, in some embodiments, the communication apparatus 2600 may include more or fewer components, or some components may be integrated, or some components may be split. The components may be implemented by hardware, software, or a combination of software and hardware.

In a possible design, the communication apparatus 2600 may include (or be) the apparatus shown in at least one embodiment in FIG. 6 to FIG. 20.

The communication apparatus in the foregoing embodiments may be a terminal device (or a network device), may be a circuit, may be a chip used in the terminal device (or the network device), or may be another combined device, component, or the like that has a function of the terminal device (or the network device). When the communication apparatus is a terminal device (or a network device), the transceiver module may be a transceiver, and may include an antenna, a radio frequency circuit, and the like, and the processing module may be a processor, for example, a CPU. When the communication apparatus is a component having a function of the terminal device (or the network device), the transceiver module may be a radio unit, and the processing module may be the processor. When the communication apparatus is a chip system, the communication apparatus may be an FPGA, a dedicated ASIC, a system on a chip (system on a chip, SoC), a CPU, a network processor (network processor, NP), a DSP, a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

An embodiment of this application further provides a communication system. Specifically, the communication system includes at least two nodes. For example, the communication system includes the first node configured to implement the function related to FIG. 23 and the second node configured to implement the function related to FIG. 23. For details, refer to related descriptions in the foregoing method embodiment. Details are not described herein again.

An embodiment of this application further provides a computer-readable storage medium, including instructions. When the instructions are run on a computer, the computer is enabled to perform the method performed by the first node or the second node in FIG. 23.

An embodiment of this application further provides a computer program product, including computer program code. When the computer program code is run, the method performed by the first node or the second node in FIG. 23 is performed.

An embodiment of this application provides a chip system. The chip system includes a processor, may further include a memory, and is configured to implement a function of the first node or the second node in the foregoing methods. The chip system may include a chip, or may include a chip and another discrete component.

To implement the functions of the communication apparatuses in FIG. 25 and FIG. 26, an embodiment of this application further provides a chip, including a processor, configured to support the communication apparatus to implement the functions of the first node or the second node in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In embodiments of this application, unless otherwise specified, a quantity of nouns represents "a singular noun or a plural noun", that is, "one or more". "A plurality of" means two or more. In view of this, "a plurality of" may also be understood as "at least two" in embodiments of this application. "At least one" may be one or more, for example, at least one is one, two, or more. For example, including at least one means that one, two, or more are included, and which one or ones are included is not limited. For example, if at least one of A, B, and C is included, A, B, C, A and B, A and C, B and C, or A, B, and C may be included. Similarly, understandings of descriptions such as "at least one" are also similar. "At least one of the following items (pieces)" or a similar expression thereof indicates any combination of the items, including one of the items (pieces) or any combination of a plurality of the items (pieces). For example, "at least one of A, B, and C" includes A, B, C, AB, AC, BC, or ABC. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" mentioned in embodiments of this application are used to distinguish a plurality of objects, and are not used to limit a sequence, a time sequence, a priority, or an importance degree of the plurality of objects. In addition, descriptions of "first" and "second" do not mean that objects are necessarily different. For example, the first node and the second node indicate that there are two nodes, and priorities or importance degrees of the two nodes are not limited.

A person of ordinary skill in the art may be aware that, illustrative logical blocks (illustrative logical blocks) and steps (steps) described with reference to embodiments disclosed in this specification may be implemented by electronic hardware, computer software, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected according to an actual requirement, to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of the following claims and their equivalent technologies.

**Claims**

1. A communication method, comprising:

   receiving a synchronization signal from a second node in a first time unit, wherein the synchronization signal is used for time synchronization between a first node and the second node, and the first time unit is configured to send a first bandwidth signal;
   sending a synchronization response signal in the first time unit in response to the synchronization signal;
   receiving a first ranging signal from the second node in a second time unit, wherein the first ranging signal is used to measure a distance between the first node and the second node, the second time unit is configured to send a second bandwidth signal, a bandwidth occupied by the second bandwidth signal is greater than a bandwidth occupied by the first bandwidth signal, and both the first time unit and the second time unit are comprised in a ranging time unit of the second node; and
   sending a first ranging response signal in the second time unit in response to the first ranging signal.

2. The method according to claim 1, wherein the bandwidth occupied by the second bandwidth signal is greater than or equal to 500 MHz, and the second bandwidth signal is a nanosecond-level pulse signal.

3. The method according to claim 2, wherein a pulse repetition frequency of the second bandwidth signal is within [16.1 MHz, 111.09 MHz].

4. The method according to any one of claims 1 to 3, wherein a moment of receiving the first ranging signal and a moment of receiving the synchronization response signal are separated by first duration, and the first duration is predefined or configured.

5. The method according to any one of claims 1 to 4, wherein a sending moment of the first ranging response signal and a sending moment of the synchronization response signal are separated by second duration, and the second duration is predefined or configured.

6. The method according to any one of claims 1 to 5, wherein the method further comprises:
   receiving a second ranging signal from the second node in the second time unit.

7. The method according to claim 6, wherein a moment of receiving the second ranging signal and the moment of receiving the first ranging signal are separated by third duration, and the third duration is predefined or configured.

8. The method according to any one of claims 1 to 7, wherein the method further comprises:
   receiving a measured value from the second node in a third time unit, wherein the third time unit is comprised in the ranging time unit of the second node, the third time unit is configured to send the first bandwidth signal, and the measured value comprises a time at which the second node receives the first ranging response signal.

9. The method according to any one of claims 1 to 8, wherein the method further comprises:
   broadcasting a control signal, wherein the control signal is the first bandwidth signal, the control signal comprises one or more of the following: network access time information or ranging duration information, and the ranging duration information comprises one or more of the following: a quantity N of ranging time units, duration occupied by the ranging time unit, duration occupied by the first time unit, duration occupied by the second time unit, or duration occupied by the third time unit.

10. A communication method, comprising:

   sending a synchronization signal in a first time unit, wherein the synchronization signal is used for time synchronization between a first node and a second node, and the first time unit is configured to send a first bandwidth signal;
   receiving a synchronization response signal from the first node in the first time unit;
   sending a first ranging signal in a second time unit, wherein the first ranging signal is used to measure a distance between the first node and the second node, the second time unit is configured to send a second bandwidth signal, a bandwidth occupied by the second bandwidth signal is greater than a bandwidth occupied by the first bandwidth signal, and both the first time unit and the second time unit are comprised in a ranging time unit of the second node; and

receiving a first ranging response signal from the first node in the second time unit.

11. The method according to claim 10, wherein the bandwidth occupied by the second bandwidth signal is greater than or equal to 500 MHz, and the second bandwidth signal is a nanosecond-level pulse signal.

12. The method according to claim 11, wherein a pulse repetition frequency of the second bandwidth signal is within [16.1 MHz, 111.09 MHz].

13. The method according to any one of claims 10 to 12, wherein a sending moment of the first ranging signal and a sending moment of the synchronization signal are separated by first duration, and the first duration is predefined or configured.

14. The method according to any one of claims 10 to 13, wherein a moment of receiving the first ranging response signal and a moment of receiving the synchronization response signal are separated by second duration, and the second duration is predefined or configured.

15. The method according to any one of claims 10 to 14, wherein the method further comprises:
sending a second ranging signal to the first node in the second time unit.

16. The method according to claim 15, wherein a sending moment of the second ranging signal and the sending moment of the first ranging signal are separated by third duration, and the third duration is predefined or configured.

17. The method according to any one of claims 10 to 16, wherein the method further comprises:
sending a measured value in a third time unit, wherein the third time unit is comprised in the ranging time unit of the second node, the third time unit is configured to send the first bandwidth signal, and the measured value comprises a time at which the second node receives the first ranging response signal.

18. The method according to any one of claims 10 to 17, wherein the method further comprises:
receiving a control signal, wherein the control signal is the first bandwidth signal, the control signal comprises one or more of the following: network access time information or ranging duration information, and the ranging duration comprises one or more of the following: a quantity N of ranging time units, duration occupied by the ranging time unit, duration occupied by the first time unit, duration occupied by the second time unit, or duration occupied by the third time unit.

19. A communication apparatus, comprising:

a transceiver module, configured to: receive a synchronization signal from a second node in a first time unit, and send a synchronization response signal in the first time unit in response to the synchronization signal, wherein the synchronization signal is used for time synchronization between the communication apparatus and the second node, and the first time unit is configured to send a first bandwidth signal; and configured to: receive a first ranging signal from the second node in a second time unit, and send a first ranging response signal in the second time unit in response to the first ranging signal, wherein the first ranging signal is used to measure a distance between the communication apparatus and the second node, the second time unit is configured to send a second bandwidth signal, a bandwidth occupied by the second bandwidth signal is greater than a bandwidth occupied by the first bandwidth signal, and both the first time unit and the second time unit are comprised in a ranging time unit of the second node; and
a processing module, configured to determine a moment of receiving the synchronization signal.

20. The apparatus according to claim 19, wherein the bandwidth occupied by the second bandwidth signal is greater than 500 MHz, and the second bandwidth signal is a nanosecond-level pulse signal.

21. The apparatus according to claim 20, wherein a pulse repetition frequency of the second bandwidth signal is within [16.1 MHz, 111.09 MHz].

22. The apparatus according to any one of claims 19 to 21, wherein a moment of receiving the first ranging signal and a moment of receiving the synchronization response signal are separated by first duration, and the first duration is predefined or configured.

23. The apparatus according to any one of claims 19 to 22, wherein a sending moment of the first ranging response signal and a sending moment of the synchronization response signal are separated by second duration, and the second duration is predefined or configured.

24. The apparatus according to any one of claims 19 to 23, wherein the transceiver module is further configured to: receive a second ranging signal from the second node in the second time unit.

25. The apparatus according to claim 24, wherein a moment of receiving the second ranging signal and the moment of receiving the first ranging signal are separated by third duration, and the third duration is predefined or configured.

26. The apparatus according to any one of claims 19 to 25, wherein the transceiver module is further configured to: receive a measured value from the second node in a third time unit, wherein the third time unit is comprised in the ranging time unit of the second node, the third time unit is configured to send the first bandwidth signal, and the measured value comprises a receiving time of the first ranging response signal.

27. The apparatus according to any one of claims 19 to 26, wherein the transceiver module is further configured to: broadcast a control signal, wherein the control signal comprises one or more of the following: network access time information or ranging duration information, the ranging duration comprises one or more of the following: a quantity N of ranging time units, duration occupied by the ranging time unit, duration occupied by the first time unit, duration occupied by the second time unit, or duration occupied by the third time unit, and the control signal is the first bandwidth signal.

28. A communication apparatus, comprising:

a transceiver module, configured to: send a synchronization signal in a first time unit, and receive a synchronization response signal from a first node, wherein the synchronization signal is used for time synchronization between the first node and the communication apparatus, and the first time unit is configured to send a first bandwidth signal; and configured to: send a first ranging signal in a second time unit, and receive a first ranging response signal from the first node, wherein the first ranging signal is used to measure a distance between the first node and the communication apparatus, the second time unit is configured to send a second bandwidth signal, a bandwidth occupied by the second bandwidth signal is greater than a bandwidth occupied by the first bandwidth signal, and both the first time unit and the second time unit are comprised in a ranging time unit of the second node; and
a processing module, configured to determine a time of receiving the first ranging response signal.

29. The apparatus according to claim 28, wherein the bandwidth occupied by the second bandwidth signal is greater than 500 MHz, and the second bandwidth signal is a nanosecond-level pulse signal.

30. The apparatus according to claim 29, wherein a pulse repetition frequency of the second bandwidth signal is within [16.1 MHz, 111.09 MHz].

31. The apparatus according to any one of claims 28 to 30, wherein a sending moment of the first ranging signal and a sending moment of the synchronization signal are separated by first duration, and the first duration is predefined or configured.

32. The apparatus according to any one of claims 28 to 31, wherein a moment of receiving the first ranging response signal and a moment of receiving the synchronization response signal are separated by second duration, and the second duration is predefined or configured.

33. The apparatus according to any one of claims 28 to 32, wherein the transceiver module is further configured to: send a second ranging signal to the first node in the second time unit.

34. The apparatus according to claim 33, wherein a sending moment of the second ranging signal and the sending moment of the first ranging signal are separated by third duration, and the third duration is predefined or configured.

35. The apparatus according to any one of claims 28 to 34, wherein the transceiver module is further configured to: send a measured value in a third time unit, wherein the third time unit is comprised in the ranging time unit of the second node, the third time unit is configured to send the first bandwidth signal, and the measured value comprises a time of receiving the first ranging response signal.

36. The apparatus according to any one of claims 28 to 35, wherein the method further comprises:
receiving a control signal, wherein the control signal comprises one or more of the following: network access time information or ranging duration information, the ranging duration comprises one or more of the following: a quantity N of ranging time units, duration occupied by the ranging time unit, duration occupied by the first time unit, duration occupied by the second time unit, or duration occupied by the third time unit, and the control signal is the first bandwidth signal.

37. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 or the method according to any one of claims 10 to 18 by using a logic circuit or by executing code instructions.

38. The apparatus according to claim 37, wherein the apparatus is connected to a narrowband chip through an interface, and the apparatus comprises an ultra-wideband UWB chip and/or a sparklink positioning SLP chip.

39. A communication system, comprising a first node and/or a second node, wherein the first node is configured to implement the method according to any one of claims 1 to 9, and the second node is configured to implement the method according to any one of claims 10 to 18.

40. A computer-readable storage medium, wherein the storage medium stores a computer program or instructions; and when the computer program or instructions are executed by a communication apparatus, the method according to any one of claims 1 to 9 or the method according to any one of claims 10 to 18 is implemented.

41. A computer program product, comprising a computer program or instructions, wherein when the computer program or the instructions are run by an apparatus, the method according to any one of claims 1 to 9 is performed, or the method according to any one of claims 10 to 18 is performed.

FIG. 1

FIG. 2

FIG. 3

EP 4 730 857 A1

| Synchronization field/ SYNC field | Start-of-frame delimiter field/SFD field | Physical layer header/PHR | Physical layer payload/ PHY payload |
|---|---|---|---|

FIG. 4

| Synchronization field/ SYNC field | Start-of-frame delimiter field/SFD field | Scrambled timestamp sequence/STS | Physical layer header/PHR | Physical layer payload/ PHY payload |
|---|---|---|---|---|

(a)

| Synchronization field/ SYNC field | Start-of-frame delimiter field/SFD field | Physical layer header/PHR | Physical layer payload/ PHY payload | Scrambled timestamp sequence/STS |
|---|---|---|---|---|

(b)

| Synchronization field/ SYNC field | Start-of-frame delimiter field/SFD field | Scrambled timestamp sequence/STS |
|---|---|---|

(c)

FIG. 5

FIG. 6

| UWB MAC | SLP MAC | ----- |
|---------|---------|-------|

Modem (modem)

RF

FIG. 7

| UWB MAC | SLP MAC | ----- |
|---------|---------|-------|

| UWB modem | SLP modem | ----- |
|-----------|-----------|-------|

RF

FIG. 8

| PMU | Wi-Fi SoC system | SLP SoC system |
|-----|------------------|----------------|
| CMU | | |
| Always on system | GNSS SoC system | UWB SoC system |

FIG. 9

FIG. 10

FIG. 11

FIG. 12

FIG. 13

Node G                                          Node T

Broadcast packet

Scanning and access request

Scanning and access response

Establish an asynchronous unicast link

. . .

Data transmission

FIG. 14

Node G                                          Node T

Broadcast packet

Scanning and access request

Scanning and access response

Establish an asynchronous multicast link

. . .

Data transmission

FIG. 15

Node G                                                    Node T

Broadcast packet

Scanning and access request

Scanning and access response

Establish an asynchronous unicast link

Establish a synchronous unicast link

. . .

Data transmission

FIG. 16

Node G                                                    Node T

Broadcast packet

Scanning and access request

Scanning and access response

Establish an asynchronous unicast link

Establish a synchronous multicast link

. . .

Data transmission

FIG. 17

Node G                                    Node T

Broadcast packet

Scanning and access request

Scanning and access response

Establish an asynchronous unicast link

Perform synchronization by adding a
timestamp to a data packet

. . .

Data transmission

FIG. 18

Node G                                    Node T

Broadcast packet

Scanning and access request

Scanning and access response

Establish an asynchronous multicast link

Perform synchronization by adding a
timestamp to a data packet

. . .

Data transmission

FIG. 19

Enable signal

Ranging control information

Time synchronization signal

Carrier frequency offset

Narrowband chip                    Wideband chip

Measured value information

Hibernation/Wakeup signal

Clock signal

FIG. 20

FIG. 21

EP 4 730 857 A1

Send a beacon frame                                    Send a beacon frame

delta

Node A

delta`

Node B

Receive a beacon frame                              Receive a beacon frame

FIG. 22

| First node | | Second node |

S2301: Synchronization signal
(sent in a first time unit)

S2302: Synchronization response signal
(sent in the first time unit)

S2303: First ranging signal
(sent in a second time unit)

S2304: First ranging response signal
(sent in the second time unit)

S2305: Second ranging signal
(sent in the second time unit)

FIG. 23

FIG. 24

EP 4 730 857 A1

2500

```
                                    2510                          2520
          ┌──────────────────────────────────────────────────────────────┐
          │                                                                │
          │   ┌──────────────┐                    ┌──────────────┐         │
          │   │              │                    │              │         │
          │   │  Processing  │                    │ Transceiver  │         │
          │   │   module     │────────────────────│   module     │         │
          │   │              │                    │              │         │
          │   └──────────────┘                    └──────────────┘         │
          │                                                                │
          └──────────────────────────────────────────────────────────────┘
```

FIG. 25

2600

```
                    2601                                    2602
          ┌──────────────────────────────────────────────────────────────────┐
          │   ┌──────────────────────┐        ┌──────────────────────┐        │
          │   │       Processor       │        │        Memory         │       │
          │   │                       │        │                       │       │
          │   │ ┌────────┐ ┌────────┐ │        │ ┌────────┐ ┌────────┐ │       │
          │   │ │Program │ │AI module│ │        │ │Program │ │AI module│ │      │
          │   │ └────────┘ └────────┘ │        │ └────────┘ └────────┘ │       │
          │   └──────────────────────┘        └──────────────────────┘        │
          │      2603       2607                  2604        2608             │
          │                                                                   │
          │   ┌──────────────────────┐        ┌──────────────────────┐        │
          │   │                       │        │                       │       │
          │   │     Transceiver       │────────│       Antenna         │       │
          │   │                       │        │                       │       │
          │   └──────────────────────┘        └──────────────────────┘        │
          │             2605                            2606                   │
          └──────────────────────────────────────────────────────────────────┘
```

FIG. 26

## INTERNATIONAL SEARCH REPORT

| | International application No. |
|---|---|
| | **PCT/CN2024/105014** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP: 同步, 测距, 距离, 测量, 带宽, 信号, 节点, 时间, 响应, 间隔, 配置, 时长, 单元, 超宽带, synchronization, distance, measurement, bandwidth, signal, node, time, response, interval, configuration, duration, unit, UWB

### C. DOCUMENTS CONSIDERED TO BE RELEVANT

| Category* | Citation of document, with indication, where appropriate, of the relevant passages | Relevant to claim No. |
|---|---|---|
| X | CN 108964867 A (SICHUAN KUNCHEN TECHNOLOGY CO., LTD.) 07 December 2018 (2018-12-07) description, paragraphs [0014]-[0047] | 1-41 |
| A | CN 111989592 A (BEIJING XIAOMI MOBILE SOFTWARE CO., LTD.) 24 November 2020 (2020-11-24) entire document | 1-41 |
| A | CN 116148830 A (MAXSCEND MICROELECTRONICS CO., LTD.) 23 May 2023 (2023-05-23) entire document | 1-41 |
| A | US 2022397659 A1 (SAMSUNG ELECTRONICS CO., LTD.) 15 December 2022 (2022-12-15) entire document | 1-41 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2024** | **16 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/105014**

| Patent document cited in search report | | | Publication date (day/month/year) | Patent family member(s) | | | Publication date (day/month/year) |
|---|---|---|---|---|---|---|---|
| CN | 108964867 | A | 07 December 2018 | None | | | |
| CN | 111989592 | A | 24 November 2020 | None | | | |
| CN | 116148830 | A | 23 May 2023 | None | | | |
| US | 2022397659 | A1 | 15 December 2022 | WO | 2022260497 | A1 | 15 December 2022 |
| | | | | EP | 4342203 | A1 | 27 March 2024 |
| | | | | CN | 117461337 | A | 26 January 2024 |

Form PCT/ISA/210 (patent family annex) (July 2022)

**EP 4 730 857 A1**

**Patent documents cited in the description**

- CN 202310916760